# EUROPÄISCHE PATENTSCHRIFT

(11) **EP 3 609 724 B1**
(45) Veröffentlichungstag und Bekanntmachung des Hinweises auf die Patenterteilung: **09.08.2023**
(21) Anmeldenummer: 18719089.7
(22) Anmeldetag: 11.04.2018
(51) Int. Cl.: B60C 29/00, B60C 23/04

(54) **LUFTREIFEN MIT FUNKCHIP**
TIRE WITH RADIOELECTRIC CHIP
PNEUMATIQUE AVEC CIRCUIT RADIOÉLECTRIQUE

(30) Priorität: 11.04.2017 DE 202017102186 U
(43) Veröffentlichungstag der Anmeldung: 19.02.2020
(73) Patentinhaber: 4JET Technologies GmbH, 52477 Alsdorf (DE)
(72) Erfinder: KRAUS, Armin, 52457 Aldenhoven (DE)
(74) Vertreter: Dilg, Haeusler, Schindelmann Patentanwaltsgesellschaft mbH
(86) Internationale Anmeldenummer: PCT/EP2018/059322
(87) Internationale Veröffentlichungsnummer: WO 2018/189258

(56) Entgegenhaltungen:
- EP-A1- 1 580 041
- FR-A1- 2 936 185
- FR-A1- 2 937 284
- US-A1- 2010 122 757

## Beschreibung

### GEBIET DER ERFINDUNG

Die vorliegende Erfindung betrifft das Gebiet von Luftreifen.

### HINTERGRUND

Aus der Praxis ist es bekannt, einen Luftreifen eines Lastkraftwagens (LKW) mit einem Funkchip zu versehen.

US 2010/122757 A1 offenbart eine Baugruppe aus Reifen und elektronischem Gerät enthaltend ein elektronisches Gerät, in dem ein Transponder-Tag mit einer Dipolantenne gekoppelt ist, die aus einem ersten und einem zweiten länglichen Antennensegment besteht. Der Transponderanhänger und mindestens ein Teil der Dipolantenne sind mindestens teilweise in eine Verbindung eingebettet, die eine mit dem Betrieb der Dipolantenne kompatible Dielektrizitätskonstante und Leitfähigkeit aufweist, und die elektronische Vorrichtung ist am Reifenkernreiter in einer Position zwischen dem Reifenkernreiter und der Reifenseitenwand in einem vorbestimmten Abstand über einem Ende der Reifenlage und in einer Ausrichtung montiert, in der eine Längsachse der Dipolantenne senkrecht zu den Korden der Reifenlage liegt.

FR 2937284 A1 offenbart ein Organ für einen Reifen, dadurch gekennzeichnet, dass es einen funktionellen Gegenstand umfasst, der in einer weichen Substanz mit sehr hoher Verformbarkeit aufgehängt ist.

FR 2936185 A1 offenbart einen Kraftfahrzeugreifen, der eine Seitenwand und ein Element aufweist, das eine elektronische Vorrichtung, eine Drahtantenne von im Wesentlichen geradliniger allgemeiner Form und Mittel zur elektrischen Verbindung zwischen der Drahtantenne und der elektronischen Vorrichtung umfasst, wobei das Element in der Seitenwand in einer solchen Anordnung eingebettet ist, dass die Antenne in Umfangsrichtung zum Reifen ausgerichtet ist und die Verbindungsmittel in radialer Richtung des Reifens ausgerichtet sind, wobei die Drahtantenne einstückig radial auf einer Seite der Vorrichtung versetzt ist.

EP 1580041 A1 offenbart eine Radiofrequenzantenne zum Einbetten in ein leitendes, dielektrisches Material (wie Reifengummi) zusammen mit einem Verfahren zum Einbetten einer Radiofrequenzantenne in ein solches Material. Für die Übertragung sehr hoher Frequenzen werden verbesserte Kommunikationsbereiche zusammen mit Verbesserungen bei der Antennenverarbeitung und -abstimmung bereitgestellt.

### ZUSAMMENFASSUNG

Angesichts der oben beschriebenen Situation gibt es ein Bedürfnis für eine Technik, welche es erlaubt, einen Luftreifen mit verbesserter und/oder erweiterter Funktionalität zu versehen.

Diesem Bedürfnis wird durch die unabhängigen Patentansprüche 1 und 12 Rechnung getragen, welche Ansprüche 1 und 12 dadurch die Erfindung definieren.

Vorteilhafte Ausführungsformen sind in den abhängigen Patentansprüchen angegeben.

Gemäß einem ersten Aspekt der hierin offenbarten Gegenstände wird ein Luftreifen (insbesondere ein Luftreifen für ein Kraftfahrzeug, insbesondere für einen Personenkraftwagen, PKW) bereitgestellt.

Gemäß einer Ausführungsform des ersten Aspektes wird ein Luftreifen bereitgestellt, der Luftreifen aufweisend: eine Innenoberfläche, welche eine Kavität definiert; eine Außenoberfläche, welche der Innenoberfläche abgewandt ist; einen Funkchip mit einer Antenne, wobei der Funkchip ausgebildet ist, um mit elektromagnetischen Wellen zu arbeiten und wobei die elektromagnetischen Wellen eine Wellenlänge aufweisen; wobei die Antenne über ihre gesamte Länge einen Abstand zu der Außenoberfläche aufweist, der im Mittel kleiner als 1/10 der Wellenlänge und/oder kleiner als 25 mm ist.

Gemäß einem zweiten Aspekt der hierin offenbarten Gegenstände wird ein bereiftes Rad (insbesondere für ein Kraftfahrzeug) bereitgestellt.

Gemäß einer Ausführungsform des zweiten Aspektes wird ein bereiftes Rad bereitgestellt, das bereifte Rad aufweisend: einen Luftreifen gemäß einer oder mehreren der hierin offenbarten Ausführungsformen des ersten Aspektes; ein Rad, auf welchem der Luftreifen montiert ist, wobei das Rad eine Radschüssel und eine Felge aufweist; und wobei Felge aus einem elektrisch leitfähigen Material besteht oder ein elektrisch leitfähiges Material aufweist.

Gemäß einem dritten Aspekt der hierin offenbarten Gegenstände wird eine Kommunikationsvorrichtung zum Auslesen oder Beschreiben des Funkchips bereitgestellt, insbesondere eines Funkchips eines Luftreifens gemäß einer oder mehreren Ausführungsformen des ersten Aspektes oder eines bereiften Rades gemäß einer oder mehreren Ausführungsformen des zweiten Aspektes.

Gemäß einem vierten Aspekt der hierin offenbarten Gegenstände wird ein Verfahren zum Auslesen oder Beschreiben des Funkchips bereitgestellt, insbesondere eines Funkchips eines Luftreifen gemäß einem oder mehreren Ausführungsformen des ersten Aspektes oder eines bereiften Rades gemäß einem oder mehreren Ausführungsformen des zweiten Aspektes.

Gemäß einem fünften Aspekt der hierin offenbarten Gegenstände wird eine Reifenprozessiervorrichtung bereitgestellt, die Reifenprozessiervorrichtung enthaltend eine Kommunikationsvorrichtung gemäß dem dritten Aspekt.

Gemäß Ausführungsformen der hierin offenbarten Gegenstände ist der Luftreifen, das bereifte Rad, die Vorrichtung oder das Verfahren eingerichtet zum Liefern der Funktionalität von einem oder mehreren der hierin beschriebenen genannten Ausführungsformen und/oder zum Liefern der Funktionalität, wie sie für eine oder mehrere der vorstehend genannten Ausführungsformen erforderlich ist, insbesondere der Ausführungsformen des ersten Aspektes, des zweiten Aspektes, des dritten Aspektes, des vierten Aspektes, und/oder des fünften Aspektes.

### BESCHREIBUNG EXEMPLARISCHER AUSFÜHRUNGSFORMEN

Gemäß einer Ausführungsform des ersten Aspektes weist der Luftreifen einen Funkchip mit einer Antenne auf, wobei der Funkchip ausgebildet ist, um mit elektromagnetischen Wellen zu arbeiten und wobei die elektromagnetischen Wellen eine Wellenlänge λ aufweisen. Die elektromagnetischen Wellen können hierbei elektromagnetische Wellen zur Energieversorgung des Funkchips sein (zum Beispiel elektromagnetische Wellen, die von einem Sender auf den Reifen angestrahlt werden). Ferner können die elektromagnetischen Wellen elektromagnetische Wellen eines Sendesignals sein, welches der Funkchip über seine Antenne abstrahlt. Es versteht sich, dass, falls der Funkchip mit mehreren Wellenlängen arbeitet, der Funkchip mehrere, entsprechend angepasste Antennen aufweisen kann.

Der Funkchip kann beispielsweise ein RFID-Chip sein (RFID = radio frequency identification). Im Gegensatz zu optischen Kennzeichnungen, wie Barcode oder 2-D Matrix Code erfordert das Lesen von RFID Chips (oder allgemeiner Funkchips) keine direkte Sichtverbindung. Funkchips können am bewegten Fahrzeug oder am bewegten Luftreifen ausgelesen werden, beispielsweise bei der Durchfahrt eines Fahrzeugs durch ein mit Lesegeräten bestücktes Tor. Auch ist ein gleichzeitiges Auslesen mehrerer Luftreifen möglich.

Die im Vergleich zu optisch zu lesenden Kennzeichnungen ungerichtete Aussendung von Funksignalen kann jedoch in Anwendungen, bei denen eine Einzelidentifizierung eines bestimmten Luftreifens gewünscht ist, von Nachteil sein. Insbesondere kommt es nicht selten zu einer Fehlerfassung eines anderen Luftreifens, der sich in räumlicher Nähe des zu erfassenden Luftreifens befindet. Diese Situation kann beispielsweise auf einem Förderband auftreten, wenn sich die Funkchips zweier benachbarter Luftreifen in unmittelbarer Nähe zueinander befinden. Ähnliches gilt für gestapelte Luftreifen oder Zwillingsbereifung zum Beispiel an Lastkraftfahrzeugen oder Bussen. Dieser Effekt kann verstärkt werden durch die für RFID-Funkchips relativ hohen Sendeleistungen, die notwendig sind, um eine Dämpfung der elektromagnetischen Wellen durch die in Luftreifen typischerweise enthaltenen hohen Anteile von leitfähigen Materialien zu kompensieren.

Übliche Luftreifen, wie sie beispielsweise für Kraftfahrzeuge wie beispielsweise PKWs verwendet werden, dämpfen typischerweise Funkwellen und/oder enthalten metallische Elemente, welche Funkwellen reflektieren können, wodurch die Funktion des Funkchips beeinträchtigt sein kann.

Gemäß Ausführungsformen der hierin offenbarten Gegenstände, werden Abschirmungs-/Dämpfungseigenschaften, welche der Luftreifen im Hinblick auf den Funkchip liefert, optimiert. Zumindest einige der hierin offenbarten Ausführungsformen sind geeignet, eine bevorzugte/gewünschte Senderichtung und/oder Empfangsrichtung zu verstärken und ein Senden/Empfangen der elektromagnetischen Wellen entlang unerwünschter Richtungen zu dämpfen oder zu verhindern. Zumindest einige der hierein offenbarten Ausführungsformen erlauben ein selektiveres Auslesen und/oder eine Vermeidung oder eine Reduzierung von Fehlerfassungen von Luftreifen / bereiften Rädern. Insbesondere kann es vorteilhaft sein, die Wellenlänge der verwendeten elektromagnetischen Wellen auf Geometrieelemente (beispielsweise die Wandstärke einer Seitenwand) des Luftreifens bzw. Geometrieelemente des Luftreifens auf die verwendete Wellenlänge anzupassen. Gemäß einer Ausführungsform ist der Funkchip ein RFID Chip, dessen Energieversorgung durch Funk von außen bereitgestellt wird. Gemäß einer weiteren Ausführungsform ist der Funkchip auslesbar und/oder beschreibbar.

Die Antenne kann jede geeignete Form aufweisen. Beispielsweise weist die Antenne gemäß einer Ausführungsform eine langgestreckte Form auf. Gemäß einer weiteren Ausführungsform ist die Antenne schleifenförmig, insbesondere sinusförmig in einer Schleife, in Form einer Helix oder spiralförmig, zum Beispiel spiralförmig in einer Ebene, ausgebildet. Gemäß einer Ausführungsform beträgt eine effektive Antennenlänge 5 cm bis 12 cm, insbesondere 7 cm bis 11 cm oder 8 cm bis 10 cm. Ein Verhältnis Rant einer aufgewickelten Antennenlänge Lw zur effektiven Antennenlänge Leff kann gemäß einer Ausführungsform weniger als drei (Rant = Lw/Leff < 3) betragen, insbesondere weniger als 2,5 (Rant < 2,5) oder weniger als 2 (Rant < 2). Gemäß einer Ausführungsform liegt die aufgewickelte Antennenlänge Lw zwischen dem 0,7 fachen der Wellenlänge und dem 1,3 fachen der Wellenlänge (0,7 λ < Lw < 1,3 λ). Gemäß einer Ausführungsform ist die Antenne mit dem Funkchip verbunden. Beispielsweise kann der Funkchip einen Treiber aufweisen zum Betreiben der Antenne und dadurch Erzeugen oder Empfangen der elektromagnetischen Wellen.

Gemäß einer weiteren Ausführungsform enthält der Funkchip reifenspezifische Informationen, beispielsweise mindestens eines von einer Seriennummer, einer Herstellerkodierung, einer Artikelbezeichnung des Luftreifens, einem DOT Code, einem TIN, einem Load-Index, einem Speed-Index. Gemäß einer Ausführungsform ist der Funkchip ausgebildet zum Liefern einer Orientierungsinformation, welche angibt, in welcher Orientierung sich der Luftreifen befindet, insbesondere mit Bezug zur Laufrichtung bei richtungsgebundenen Luftreifen. Beispielsweise kann der Funkchip in einer Seitenwand des Luftreifens angeordnet sein und eine zirkular polarisierte elektromagnetische Welle abgeben, wodurch unterscheidbar ist, ob der Luftreifen sich in einer ersten Orientierung oder in einer zweiten, senkrecht zu der Reifendrehachse um 180 Grad gedrehten Orientierung befindet. Gemäß einer anderen Ausführungsform ist die Orientierung des Luftreifens aus der Intensität der von einem Lesegerät empfangenen Funksignale des Funkchips ableitbar, insbesondere, wenn gemäß Ausführungsformen der hierin offenbarten Gegenstände elektromagnetische Wellen, welche die Reifenbreite durchqueren müssen, gedämpft werden. Hierzu weist der Funkchip gemäß einer Ausführungsform eine vorbestimmte Sendeleistung auf oder ist auf eine vorbestimmte Sendeleistung einstellbar.

Gemäß einer weiteren Ausführungsform enthält der Funkchip eine Batterie und/oder eine Vorrichtung zur Gewinnung von Energie aus der Bewegung oder der Formation des Luftreifens (beispielsweise ein Piezoelement). Gemäß einer weiteren Ausführungsform enthält der Funkchip mindestens einen Sensor. Gemäß einer Ausführungsform umfasst der mindestens eine Sensor mindestens einen von einem Temperatursensor, einem Drucksensor, einem Bewegungssensor, einem Beschleunigungssensor, etc.

Gemäß einer weiteren Ausführungsform weist der Luftreifen auf seiner äußeren Oberfläche im Bereich der Seitenwand eine Positionsmarkierung auf, welche eine Position des Funkchips anzeigt (beispielsweise eine Seite des Luftreifens und eine Winkelposition; beispielsweise, indem auf einer Seitenwand, in welcher sich der Funkchip befindet und insbesondere an einer Position der Seitenwand, an der sich der Funkchip befindet, eine sichtbare Markierung angebracht ist).

Gemäß einer Ausführungsform weist die Antenne über ihre gesamte Länge einen Abstand d1 zu der Außenoberfläche des Luftreifens auf, der im Mittel kleiner als ein Zehntel der Wellenlänge λ ist (d1 < 1/10 λ). Gemäß einer Ausführungsform ist der Abstand in einer Richtung parallel zu der Reifendrehachse definiert. Gemäß einer weiteren Ausführungsform weist die Antenne über ihre gesamte Länge einen Abstand zu der Außenoberfläche des Luftreifens auf, der im Mittel kleiner als ein Siebtel der Wellenlänge (d1 < 1/7 λ), insbesondere kleiner als ein fünfzehntel der Wellenlänge (d1 < 1/15 λ) oder kleiner als ein Zwanzigstel der Wellenlänge (d1 < 1/20 λ) ist. Gemäß einer nochmals weiteren Ausführungsform weist die Antenne über ihre gesamte Länge einen Abstand zu der Außenoberfläche des Luftreifens auf, der im Mittel kleiner als ein dreißigstel der Wellenlänge (d1 < 1/30 λ), beispielsweise kleiner als ein Fünfzigstel (d1 < 1/50 λ) und insbesondere kleiner als Hundertstel der Wellenlänge ist (d1 < 1/100 λ). Gemäß einer Ausführungsform weist die Antenne über ihre gesamte Länge einen Abstand d1 zu der Außenoberfläche des Luftreifens auf, der im Mittel in einem Intervall zwischen einem siebtel und einem Hundertstel der Wellenlänge ist (1/7 λ < d1 < 1/100 λ), beispielsweise zwischen einem Zehntel und einem Fünfzigstel (1/10 λ < d1 < 1/50 λ), insbesondere zwischen einem Fünfzehntel und einem Dreißigstel der Wellenlänge (1/15 λ < d1 < 1/30 λ).

Gemäß einer Ausführungsform ist der Abstand der Antenne zu der Außenoberfläche über die gesamte Länge der Antenne stets kleiner als 1/7 der Wellenlänge.

Gemäß einer Ausführungsform beträgt der Abstand der Antenne zu der Außenoberfläche über ihre gesamte Länge im Mittel nicht mehr als 25 mm, beispielsweise nicht mehr als 15 mm, insbesondere nicht mehr als 10 mm oder nicht mehr als 3 mm. Gemäß einer weiteren Ausführungsform beträgt der Abstand der Antenne zu der Außenoberfläche über ihre gesamte Länge im Mittel nicht mehr als 1 mm. Gemäß einer weiteren Ausführungsform liegt der Abstand der Antenne zu der Außenoberfläche über ihre gesamte Länge in einem Intervall zwischen 1 mm und 25 mm, beispielsweise zwischen 15 mm und 3 mm.

Gemäß einer Ausführungsform ist der Abstand der Antenne zu der Außenoberfläche ein erster Abstand, der im Mittel (über die Länge der Antenne) höchstens doppelt so groß ist wie ein zweiter Abstand der Antenne zu der Innenoberfläche. Mit anderen Worten ist der erste Abstand höchstens zweimal (2x) so groß wie der zweite Abstand. Gemäß einer weiteren Ausführungsform ist der erste Abstand höchstens dreimal (3x) so groß wie der zweite Abstand. Gemäß einer nochmals weiteren Ausführungsform ist der erste Abstand höchstens 1,5x, beispielsweise höchstens 1x, insbesondere höchstens 0,7x, 0,5x, 0,3x oder 0,15x so groß wie der zweite Abstand. Gemäß einer Ausführungsform ist in einem montierten Zustands des Luftreifens die Innenoberfläche der Felge zugewandt und bildet mit der Felge eine Kavität, die mit Druckgas füllbar ist. Dies ist beispielsweise bei einem schlauchlosen Luftreifen der Fall. Gemäß einer anderen Ausführungsform ist der Luftreifen konfiguriert zur Aufnahme von einem Schlauch.

Gemäß einer Ausführungsform ist der Funkchip vor der Vulkanisation des Luftreifens in den Luftreifen eingebracht worden. Beispielsweise ist gemäß einer Ausführungsform der Funkchip vor der Vulkanisation des Luftreifens in einen seitlichen Teil des Luftfreifens (z. B. eine Seitenwand des Luftreifens oder in eine Reifenschulter des Luftreifens) eingebracht worden. Gemäß einer nochmals weiteren Ausführungsform ist der Funkchip durch Vulkanisation des Luftreifens in den Luftreifen einvulkanisiert worden.

Gemäß einer Ausführungsform ist der Funkchip nach der Vulkanisation des Luftreifens an der Seitenwand angebracht worden. Beispielsweise ist gemäß einer Ausführungsform der Funkchip nach der Vulkanisation des Luftreifens von innen an dem seitlichen Teil des Luftreifens (z. B. an einer Seitenwand des Luftreifens oder an einer Reifenschulter des Luftreifens) angebracht worden.

Gemäß einer Ausführungsform ist eine Wandstärke der Seitenwand in einem Gebiet, über das sich der Funkchip erstreckt, größer ist als die Wandstärke an 30% aller anderen Positionen der Seitenwand. Beispielsweise ist gemäß einer Ausführungsform eine Wandstärke der Seitenwand in einem Gebiet, über das sich der Funkchip erstreckt, größer als die Wandstärke an 50 % aller anderen Positionen der Seitenwand, oder größer als die Wandstärke an 70 % aller anderen Positionen der Seitenwand.

Gemäß einer Ausführungsform beträgt eine mittlere Wandstärke der Seitenwand in einem Gebiet, über das sich der Funkchip erstreckt, zwischen 3 mm und 40 mm, beispielsweise zwischen 2 mm und 30 mm, zwischen 5 mm und 20 mm oder insbesondere zwischen 7 mm und 40 mm.

Gemäß einer Ausführungsform ist die Wandstärke der Seitenwand definiert als Wandstärke der Seitenwand gemessen in einer Richtung senkrecht zu der äußeren Oberfläche. Gemäß einer anderen Ausführungsform ist die Wandstärke der Seitenwand definiert als Wandstärke der Seitenwand gemessen in einer Richtung parallel zu der Reifendrehachse. Diese Definition der Wandstärke (parallel zur Reifendrehachse) liefert üblicherweise vergleichbare Ergebnisse wie die erste Definition (senkrecht zur äußeren Oberfläche), kann jedoch vorteilhaft sein, wenn die äußere Oberfläche stark gekrümmt ist.

Gemäß einer Ausführungsform weist der Luftreifen in einer Lauffläche mindestens eine erste Lage an ersten Stahlfäden auf, die gemeinsam einen ersten Stahlgürtel mit einem ersten Durchmesser d bilden, wobei der erste Durchmesser ein maximaler Durchmesser des ersten Stahlgürtels ist. Gemäß einer weiteren Ausführungsform ist ein mittlerer Abstand dz1 der Antenne zu einer Zylinderfläche um eine Reifendrehachse mit dem ersten Durchmesser d kleiner als 5 cm und/oder kleiner als 1/7 der Wellenlänge. Gemäß anderen Ausführungsformen ist der Abstand dz1 in einem Bereich, wie er oben für den Abstand d1 zwischen Antenne und der Außenoberfläche des Luftreifens definiert wurde. Gemäß nochmals anderen Ausführungsformen ist der mittlere Abstand dz1 der Antenne zu der Zylinderfläche mit dem ersten Durchmesser d kleiner als 15 cm, insbesondere kleiner als 10 cm, kleiner als 8 cm, oder kleiner als 3 cm.

Durch die Anbringung des Senders in möglichst geringem Abstand von dem abschirmenden Stahlgürtel wird die unerwünschte Abstrahlung mit Richtungsanteilen senkrecht zur Reifendrehachse reduziert. Dies kann insbesondere vorteilhaft sein für eine Funkkommunikation (beispielsweise ein Auslesen des Funkchips), wenn sich der Luftreifen auf einer Fördereinrichtung (zum Beispiel einem Förderband) befindet.

Gemäß einer weiteren Ausführungsform weist der Luftreifen in der Lauffläche eine zweite Lage an zweiten Stahlfäden auf, die gemeinsam einen zweiten Stahlgürtel bilden; der zweite Stahlgürtel konzentrisch zum ersten Stahlgürtel angeordnet ist; und die zweiten Stahlfäden einen Winkel zwischen 60° und 120° mit den ersten Stahlfäden bilden. Gemäß einer anderen Ausführungsform bilden die ersten Stahlfäden und die zweiten Stahlfeder in einen Winkel zwischen 80 Grad und 100 Grad, insbesondere zwischen 70 Grad und 110 Grad. Sich kreuzende Stahlfäden haben den Vorteil, dass sie reflektierend für elektromagnetische Wellen wirken, unabhängig von einer Polarisation der elektromagnetischen Wellen.

Gemäß einer weiteren Ausführungsform ist die Antenne bezüglich des ersten Stahlgürtels so angeordnet, dass eine kürzeste Verbindungslinie von der Antenne zu einem nächstgelegenen, ersten Rand des ersten Stahlgürtels eine erste Position auf dem ersten Stahlgürtel definiert und einen ersten Winkel mit einer Reifendrehachse bildet; und eine längste Verbindungslinie von der Antenne zu einer zweiten Position auf einem zweiten Rand des Stahlgürtels einen zweiten Winkel mit der Reifendrehachse bildet, wobei der zweite Rand des ersten Stahlgürtels entgegengesetzt dem ersten Rand des ersten Stahlgürtels ist; wobei die zweite Position auf dem zweiten Rand des Stahlgürtels durch Spiegelung der ersten Position an einer Ebene senkrecht zur Reifendrehachse definiert ist; und wobei eine Differenz zwischen dem erstem Winkel und dem zweitem Winkel größer als 45 Grad ist. Hierdurch kann eine Richtwirkung der elektromagnetischen Wellen in einer Richtung parallel zu der Reifendrehachse erzielt werden. Gemäß einer weiteren Ausführungsform ist die Differenz zwischen dem ersten Winkel und dem zweiten Winkel größer als 60 Grad, insbesondere größer als 90 Grad oder größer als 100 Grad.

Gemäß einer weiteren Ausführungsform liegt die Wellenlänge in einem Bereich zwischen 10 cm und 40 cm, insbesondere zwischen 25 cm und 35 cm; wobei insbesondere die Wellenlänge eine Sendewellenlänge und/oder eine Empfangswellenlänge ist.

Gemäß einer Ausführungsform weist mindestens 70% der Gesamtintensität der elektromagnetischen Wellen (insbesondere der elektromagnetischen Wellen am Ort der Antenne) einen elektrischen Feld-Vektor auf, der senkrecht steht auf einem Lot auf die Reifendrehachse durch den Mittelpunkt der Antenne.

Gemäß einer weiteren Ausführungsform weist mindestens 70% der Gesamtintensität der elektromagnetischen Wellen einen elektrischen Feld-Vektor auf, der parallel angeordnet ist zu dem Lot auf die Reifendrehachse durch den Mittelpunkt der Antenne.

Im ersteren Fall (elektrischer Feldvektor senkrecht auf dem Lot) kann eine gerichtete Transmission der elektromagnetischen Wellen erzielt werden, während im zweiten Fall (elektrischer Feldvektor parallel zu dem Lot) eine Dämpfung der elektromagnetischen Wellen erzielt werden kann.

Gemäß einer Ausführungsform weisen 70 % bis 95 %, insbesondere 70 % bis 80 %, 80 bis 90 % oder 90 bis 95 % der elektromagnetischen Wellen einen solchen elektrischen Feldvektor (senkrecht oder parallel zum Lot) auf.

Gemäß einer Ausführungsform ist der Funkchip ein erster Funkchip und der Luftreifen enthält ferner einen zweiten Funkchip, der als Repeater wirkt, insbesondere indem er ein Signal des ersten Funkchips empfängt und weiterleitet oder ein Signal von außerhalb des Luftreifens empfängt und an den ersten Funkchip weiterleitet. Auf diese Weise kann eine hohe Flexibilität der Positionierung des (ersten) Funkchips erreicht werden, während gleichzeitig eine zuverlässige Übertragung der elektromagnetischen Wellen sichergestellt werden kann.

Gemäß einer weiteren Ausführungsform ist der Repeater in oder an der Seitenwand des Luftreifen angebracht und der erste Funkchip ist in der Lauffläche oder an der Innenseite der Lauffläche angebracht.

Gemäß einer Ausführungsform ist die Antenne des Funkchips eine Dipolantenne und die Polarisation der elektromagnetischen Wellen ist linear.

Gemäß einer weiteren Ausführungsform ist die Antenne des Funkchips eine Ringantenne oder eine gekreuzte Dipolantenne.

Gemäß einer weiteren Ausführungsform ist eine von dem Funkchip über die Antenne abgestrahlte elektromagnetische Welle zirkular polarisiert. Auf diese Weise (beispielsweise durch entsprechende Filterung oder Detektion der Polarisationsdrehrichtung) kann zwischen den Seitenwänden unterschieden werden. Beispielsweise kann auf diese Weise bestimmt werden, welche Seitenwand des Luftreifens einem Lesegerät zugewandt ist. Dies kann insbesondere vorteilhaft sein zum Beispiel wenn laufrichtungsgebundene Fahrzeugreifen am Fahrzeug montiert sind und die korrekte Montage überprüft werden soll oder der Luftreifen sich auf einer Fördereinrichtung befindet und bestimmt werden soll, welche Seitenwand des Luftreifens nach oben weist.

Gemäß einer Ausführungsform ist der Funkchip in oder an einer ersten Seitenwand des Luftreifens angebracht und eine zweite Seitenwand des Luftreifens, welche der ersten Seitenwand gegenüberliegt, weist ein die Wellenlänge des Funkchips reflektierendes Material und/oder ein die Wellenlänge des Funkchips absorbierendes Material auf (nachfolgend kurz als reflektierendes/absorbierendes Material bezeichnet). Gemäß einer Ausführungsform kann dasselbe Material beide Funktionen (reflektierend und absorbieren) aufweisen. Gemäß einer anderen Ausführungsform können zwei verschiedene Materialien vorgesehen sein, beispielsweise ein erstes, absorbierendes Material und ein zweites, reflektierendes Material.

Gemäß einer Ausführungsform ist das reflektierende/absorbierende Material gegenüber dem Funkchip angeordnet. Gemäß einer weiteren Ausführungsform ist das reflektierende/absorbierende Material (oder, in einer anderen Ausführungsform, der Schwerpunkt des reflektierenden/absorbieren Materials) an einer Stelle angeordnet, welche durch die kürzeste Verbindungslinie zwischen der Antenne und der Außenoberfläche der zweiten Seitenwand des Luftreifens definiert ist. Gemäß einer weiteren Ausführungsform beträgt eine Fläche des reflektierenden/absorbieren Materials mindestens 10 cm², beispielsweise mindestens 15 cm² oder mindestens 20 cm². Gemäß einer nochmals weiteren Ausführungsform weist die gesamte Fläche der zweiten Seitenwand das reflektierende/absorbierende Material auf.

Gemäß einer Ausführungsform weist das reflektierende/absorbierende Material mindestens ein leitendes Material, beispielsweise Metall auf oder besteht aus einem solchen Material. Gemäß einer anderen Ausführungsform weist das reflektierende/absorbierende Material Kohlenstoff, beispielsweise leitfähiges Ruß, etc. auf oder besteht aus mindestens einem solchen Material. Das absorbierende/reflektierende Material kann gemäß einer Ausführungsform das Gummimaterial der zweiten Seitenwand sein.

Gemäß einer Ausführungsform bildet das absorbierende/reflektierende Material mindestens eine Schicht der zweiten Seitenwand des Luftreifens, insbesondere wenn dieses Material zu mindestens 30% aus Metall besteht. Gemäß einer Ausführungsform ist die mindestens eine Schicht eine zusammenhängende Schicht. Gemäß einer anderen Ausführungsform ist die mindestens eine Schicht eine Schicht, welche Durchbrüche aufweist. Beispielsweise kann die mindestens eine Schicht ein Netz oder ein Gitter sein, welches aus dem absorbierenden/reflektierenden Material gebildet ist oder welches das absorbierende/reflektierende Material aufweist.

Gemäß einer Ausführungsform weist der Luftreifen einen Kernreiter aus einem leitenden Material auf (im Bereich seiner Wulst), wobei eine Länge des Kernreiters in einem Bereich zwischen (n+0,5 ^{∗} x) ^{∗} λ und (n+0,5 ^{∗} y) ^{∗} λ liegt, wobei x = 85% und y = 115% und n eine natürliche Zahl ist. Auf diese Weise kann eine Resonanz der elektromagnetischen Wellen mit dem Kernreiter vermieden oder zumindest reduziert werden. Es wird angemerkt, dass, falls der Kernreiter ringförmig geschlossen ist, die Länge des Kernreiters durch Änderung des Durchmessers des Kernreiters verändert werden kann bzw. die Wellenlänge an die Länge des Kernreiters angepasst werden kann. Gemäß einer weiteren Ausführungsform liegt x in einem Bereich zwischen 80 % und 95 % und y liegt in einem Bereich zwischen 105 % bis 120 %.

Gemäß einer Ausführungsform des zweiten Aspektes der hierin offenbarten Gegenstände weist ein bereiftes Rad ein Rad auf, auf welchem der Luftreifen montiert ist, wobei das Rad eine Radschüssel und eine Felge aufweist. Gemäß einer Ausführungsform bilden der Luftreifen und die Felge gemeinsam die mit Druckgas beaufschlagbare Kavität des Luftreifens. Gemäß einer weiteren Ausführungsform besteht die Felge aus einem oder enthält die Felge ein elektrisch leitfähiges Material. In diesem Fall kann die Felge die elektromagnetische Wellen nach innen abschirmen.

Gemäß einer Ausführungsform weist die Felge mindestens eines von Aluminium, Silizium, Magnesium, Carbon auf. Gemäß einer Ausführungsform weist die Felge eine Aluminiumlegierung auf. Gemäß einer weiteren Ausführungsform besteht die Felge aus Aluminium oder aus einer Aluminiumlegierung. Eine Aluminiumlegierung kann gegenüber Stahl verbesserte Absorptions- oder Reflektionseigenschaften für die elektromagnetische Strahlung aufweisen.

Gemäß einer Ausführungsform weist ein Felgenbett der Felge einen mittleren Durchmesser d2 auf und ein mittlerer Abstand der Antenne zu einer Zylinderfläche um die Reifendrehachse mit dem Durchmesser d2 ist kleiner als 5 cm und/oder kleiner als 1/4 der Wellenlänge (der elektromagnetischen Wellen). Gemäß einer weiteren Ausführungsform ist der mittlere Abstand der Antenne zu einer Zylinderfläche um die Reifendrehachse mit dem Durchmesser d2 kleiner als 15 cm, insbesondere kleiner als 10 cm, beispielsweise kleiner als 8 cm oder kleiner als 3 cm. Gemäß einer weiteren Ausführungsform ist der mittlere Abstand der Antenne zu einer Zylinderfläche um die Reifendrehachse mit dem Durchmesser d2 kleiner als die halbe Wellenlänge, insbesondere kleiner als ein Drittel der Wellenlänge, kleiner als ein Siebtel der Wellenlänge, kleiner als ein Zehntel der Wellenlänge oder kleiner als ein fünfzehntel der Wellenlänge. Durch die Positionierung der Antenne in möglichst großer räumlicher Nähe zur abschirmenden Felge wird eine unerwünschte Abstrahlung mit Richtungsanteilen senkrecht zur Reifendrehachse reduziert.

Gemäß einer Ausführungsform bildet die Antenne des Funkchips mit der Felge eine räumliche Anordnung in welcher, eine kürzeste Verbindungslinie von der Antenne zu einem nächstgelegenen, ersten Rand der Felge eine dritte Position auf der Felge definiert und einen dritten Winkel mit der Reifendrehachse bildet; und eine längste Verbindungslinie von der Antenne zu einer vierten Position auf einem zweiten Rand der Felge einen vierten Winkel mit der Reifendrehachse bildet, wobei der zweite Rand der Felge entgegengesetzt dem ersten Rand der Felge ist; wobei die vierte Position auf dem zweiten Rand der Felge durch Spiegelung der dritten Position an einer Ebene senkrecht zur Reifendrehachse definiert ist; und wobei die Differenz zwischen dritten Winkel und vierten Winkel größer als 45 Grad ist. Gemäß einer weiteren Ausführungsform ist die Differenz zwischen dem dritten Winkel und dem vierten Winkel größer als 60 Grad, insbesondere größer als 90 Grad oder größer als 100 Grad.

Gemäß einer weiteren Ausführungsform ist die Summe der Differenz zwischen dem ersten Winkel und dem zweitem Winkel und der Differenz zwischen dritten Winkel und dem vierten Winkel größer als 120 Grad. Gemäß einer weiteren Ausführungsform ist die Summe der Differenzen größer als 100 Grad, insbesondere größer als 140 Grad oder größer als 160 Grad. Hierdurch kann eine Richtwirkung für die elektromagnetischen Wellen ungefähr in einer Richtung parallel zu der Reifendrehachse erzielt werden.

Gemäß einer Ausführungsform weist der Funkchip von einem ersten Felgenrand einen geringeren Abstand als von einem zweiten Felgenrand auf; und ein Felgenbett der Felge weist ein Profil auf, welches in einem ersten axialen Abstand f1 von dem ersten Felgenrand einen ersten radialen Abstand r1 von der Reifendrehachse aufweist und welches in einem zweiten axialen Abstand f2 von dem ersten Felgenrand einen zweiten radialen Abstand r2 von der Reifendrehachse aufweist, wobei zweite axiale Abstand f2 größer ist als der erste axiale Abstand f1 und wobei der zweite radiale Abstand r2 größer ist als der erste radiale Abstand r1. gemäß einer Ausführungsform ist der zweite axiale Abstand f2 kleiner als 50 % einer Maulweite der Felge, insbesondere kleiner als 40 %, kleiner als 30 % oder kleiner als 20 % der Maulweite der Felge.

Gemäß einer Ausführungsform weisen höchstens 30% eines Felgenbettes der Felge eine Neigung gegenüber der Reifendrehachse von größer als +3° (beispielsweise größer als 5 Grad, insbesondere größer als 7 Grad, größer als 10 Grad oder größer als 15 Grad) auf, wobei solche Winkel als positiv definiert sind, für welche das Felgenbettes zu dem Funkchip hin geneigt ist. Mit anderen Worten sind solche Winkel als positiv definiert, die dazu führen, dass eine gedachte Verlängerung des um mehr als 3° geneigten Felgenbettes die Reifendrehachse auf der Seite des Luftreifens schneidet, auf der die Antenne des Funkchips angeordnet ist. Gemäß weiterer Ausführungsformen weisen höchstens 50% des Felgenbettes oder höchstens 40% des Felgenbettes oder aber höchstens 25 % des Felgenbettes (insbesondere höchstens 20 % des Felgenbettes) eine Neigung gegenüber der Reifendrehachse auf, die größer als die angegebene Gradzahl gemäß Ausführungsformen ist. Gemäß einer Ausführungsform weist ein Anteil des Felgenbettes eine Neigung in einem Bereich zwischen 3 Grad und 20 Grad, beispielsweise zwischen 4 Grad und 7 Grad auf. Gemäß einer weiteren Ausführungsform beträgt der Anteil des Felgenbettes, der eine Neigung gegenüber der Reifendrehachse in diesem Bereich aufweist, zwischen 30 % und 80 %, beispielsweise zwischen 40 % und 70 %.

Durch Reduktion von stark geneigten Teilen des Felgenbettes bzw. Positionieren von stark geneigten Teilen des Felgenbettes nahe der Antenne des Funkchips können unerwünschten Interferenzen auf der Funkchipseite (die beispielsweise durch doppelte Rückreflektion an Gürtel, Felge, Gürtel auftreten können) reduziert werden.

Gemäß einer Ausführungsform ist ein mittlerer Abstand zwischen dem ersten Stahlgürtel und dem Felgenbett kleiner als die halbe Wellenlänge (der elektromagnetischen Wellen, z.B. einer der empfangenen oder gesendeten Signale des Funkchips). Gemäß einer weiteren Ausführungsform verläuft mindestens eine Richtungskomponente der Antenne des Funkchips tangential zur Reifenoberfläche. Gemäß einer weiteren Ausführungsform verläuft mindestens eine Richtungskomponente der Antenne des Funkchips senkrecht zur Reifenoberfläche. Auf diese Weise können elektromagnetische Wellen durch den Luftreifen parallel zur Reifendrehachse wahlweise gedämpft oder zugelassen werden. Abhängig von der konkreten Realisierung kann eine elektromagnetische Wellen außerhalb des Luftreifens verstärkt sein.

Gemäß einer Ausführungsform ist ein Verhältnis R von einer Felgenbreite der Felge zu einem mittleren Abstand zwischen dem Felgenbett der Felge und dem ersten Stahlgürtel größer ist als 1,5 (R = Felgenbreite / (mittlerer Abstand zwischen der Felge und dem ersten Stahlgürtel). Gemäß einer weiteren Ausführungsform ist das Verhältnis R größer als zwei (R > 2), insbesondere größer als 2,5 (R > 2,5) oder größer als 3 (R > 3).

Gemäß einer Ausführungsform ist das Verhältnis S der Felgenbreite zu der Wellenlänge λ größer ist als 0,7 (S = Felgenbreite / λ; S > 0,7). Gemäß weiteren Ausführungsformen ist S > 1, insbesondere S > 1,3 oder S > 1,5 oder S > 1,5 oder S >1,7 oder S > 2. Auf diese Weise kann das oben beschriebene Dämpfungsverhalten des bereiften Rades durch Erhöhung des Verhältnisses R und/oder S verstärkt werden.

Da Funkchips in Luftreifen insbesondere auch am bewegten Rad ausgelesen werden, schließen Ausführungsformen der hierin offenbarten Gegenstände insbesondere auch den Fall ein, dass das bereifte Rad an einem Fahrzeug montiert ist und der Luftreifen durch statische oder dynamische Belastung deformiert ist.

Gemäß einer Ausführungsform wird ein Verfahren zum Auslesen und/oder Beschreiben des Funkchips des Luftreifens oder des bereiften Rades bereitgestellt. Gemäß einer Ausführungsform wird eine Kommunikationsvorrichtung zum Durchführen eines solchen Verfahrens bereitgestellt.

Gemäß einer Ausführungsform ist die Kommunikationsvorrichtung oder das Verfahren eingerichtet zum Auslesen und/oder Beschreiben des Funkchips in Form eines passiven RFID-Chip. Gemäß einer Ausführungsform wird von der Kommunikationsvorrichtung eine Energie bereitgestellt, welche zum Betreiben des Funkchips erforderlich ist. Gemäß einer Ausführungsform wird die Energie in Form einer elektromagnetischen Strahlung bereitgestellt. Gemäß einer weiteren Ausführungsform wird die Energie mit mindestens 70% ihrer Intensität in einem Raumwinkel von 30 Grad abgestrahlt. Eine solche Intensitätsverteilung resultiert gemäß einer Ausführungsform in einem Intensitätskegel mit einem Winkel von 30° zur Reifendrehachse des Luftreifens oder des bereiften Rades konzentriert ist.

Gemäß einer Ausführungsform weist eine Reifenprozessorvorrichtung eine Fördereinrichtung (beispielsweise eines Förderbandes) zum Fördern von Luftreifen (und/oder eines bereiften Rädern) und/oder eine Kommunikationsvorrichtung gemäß Ausführungsformen der hierin offenbarten Gegenstände auf.

In einigen Ausführungsformen der hierin offenbarten Gegenstände, insbesondere hinsichtlich der Fördereinrichtung, wird teilweise lediglich auf einen Luftreifen Bezug genommen, wobei die Bezugnahme auf einen Luftreifen eine Bezugnahme auf ein bereiftes Rad mit einschließt. Denn die Bezugnahme auf einen Luftreifen schließt allgemein die Bezugnahme auf einen separaten Luftreifen als auch die Bezugnahme auf einen Luftreifen, der auf ein Rad montiert ist, ein.

Gemäß einer Ausführungsform ist die Fördereinrichtung eingerichtet, um den Luftreifen (das bereifte Rad) in einer Laufrichtung zu fördern, wobei die Laufrichtung senkrecht zu der Reifendrehachse des Luftreifens (des bereiften Rades) erfolgt. Gemäß einer Ausführungsform ist die Fördereinrichtung eingerichtet, um den Luftreifen der Kommunikationsvorrichtung zuzuführen. Gemäß einer Ausführungsform weist der Luftreifen (das bereifte Rad) während des Beschreibens/Auslesens einen Mindestabstand dx von 2 mal der Wellenlänge λ (dx = 2 λ) zum vorhergehenden oder nachfolgenden Luftreifen (bereiften Rad) auf. Gemäß einer weiteren Ausführungsform ist dx = 2,5 λ, dx = 3 λ, dx = 4 λ oder dx = 5 λ.

Durch Positionieren der Antenne des Funkchips nahe einem Stahlgürtel des Luftreifens oder nahe einer Felge des bereiften Rades kann eine unerwünschte Abstrahlung der Antenne mit Richtungsanteilen senkrecht zur Reifendrehachse reduziert werden, wodurch kleine Mindestabstände zwischen den Luftreifen auf der Fördereinrichtung realisierbar sind.

Gemäß einer Ausführungsform wird der Funkchip des Luftreifens (des bereiften Rades) während des Auslesens durch eine Abschirmvorrichtung von Störsignalen anderer Funkchips von weiteren Luftreifen oder bereiften Rädern abgeschirmt. Gemäß einer Ausführungsform besteht die Abschirmvorrichtung aus Metall oder weist Metall auf, beispielsweise mit einem Anteil von mindestens 30 %. Gemäß einer Ausführungsform deckt die Abschirmvorrichtung mindestens einen Raumwinkel von 45 Grad ab (oder, gemäß anderer Ausführungsform einen Raumwinkel von mindestens 50 Grad, mindestens 60 Grad oder mindestens 75 Grad). Ein Raumwinkel von 45 Grad entspricht hierbei einem Kegel mit einem Kegelwinkel von 45 Grad.

Gemäß einer Ausführungsform weist die Kommunikationsvorrichtung ein Lesegerät zum Auslesen des Funkchips auf. Gemäß einer Ausführungsform ist das Lesegerät eingerichtet, um eine Richtung einer zirkularen Polarisation zu erkennen. Gemäß einer Ausführungsform ist die Kommunikationsvorrichtung eingerichtet, um aus der zirkularen Polarisationsrichtung auf die Orientierung des Luftreifens oder bereiften Rades zum Lesegerät zu schließen. Insbesondere ist eine Steuervorrichtung der Kommunikationsvorrichtung gemäß einer Ausführungsform eingerichtet, um aus der Richtung der zirkularen Polarisation zu bestimmen, ob eine erste Seitenwand des Luftreifens, welche den Funkchip enthält, dem Lesegerät zugewandt ist, oder dem Lesegerät abgewandt ist.

Die Steuervorrichtung der Kommunikationsvorrichtung kann eine dezidierte Steuervorrichtung der Kommunikationsvorrichtung sein oder kann gemäß anderer Ausführungsform eine Steuervorrichtung einer übergeordneten Vorrichtung, beispielsweise der Reifenprozessiervorrichtung sein.

Gemäß einer Ausführungsform weist die Reifenprozessiervorrichtung eine Steuervorrichtung auf, die eingerichtet ist, um Komponenten der Reifenprozessiervorrichtung, beispielsweise die Fördereinrichtung und/oder die Kommunikationsvorrichtung zu steuern.

Gemäß einer Ausführungsform weist die Steuervorrichtung mindestens einen Prozessor auf zum Ausführen eines Programmelements und dadurch Steuern von einem Verfahren oder einer Vorrichtung gemäß einer oder mehreren Ausführungsformen der hierin offenbarten Gegenstände.

Wie hierin verwendet wird die Bezugnahme auf ein Computerprogramm als Äquivalent angesehen zu einer Bezugnahme auf ein Programmelement und/oder ein computerlesbares Medium, welches ein Programmelement enthält. Gemäß einer Ausführungsform weist ein Programmelement Instruktionen zum Steuern eines Computersystems auf, zum Bewirken und/oder Koordinieren der Ausführung eines hierein beschriebenen Verfahrens.

Das Computerprogramm kann implementiert seien als Computer lesbar Instruktionscode unter Verwendung von jeder geeigneten Programmiersprache, wie beispielsweise JAVA, C++, und kann auf einem Computer lesbaren Medium (entfernbare Platte, flüchtiger oder nichtflüchtiger Speicher, Embedded-Speicher/Prozessor, etc.) gespeichert sein. Der Instruktionscode ist ausführbar zum Programmieren eines Computers oder irgendeiner anderen programmierbaren Vorrichtung zum Ausführen der beabsichtigten Funktionen. Das Computerprogramm kann in einem Netzwerk verfügbar sein, beispielsweise dem World Wide Web, von welchem es beispielsweise herunter geladen werden kann.

Die hierin offenbarten Gegenstände können mittels eines Computerprogramms respektive Software realisiert werden. Jedoch können die hierin offenbarten Gegenstände ebenso durch einen oder mehrere spezifische elektronische Schaltungen, respektive Hardware realisiert werden. Ferner können die hierin offenbarten Gegenstände ebenso in Hybridform, d. h. In einer Kombination von Softwaremodulen und Hardwaremodulen realisiert werden.

Im Folgenden werden exemplarische Ausführungsformen der hierin offenbarten Gegenstände beschrieben, wobei beispielsweise auf einen Luftreifen, ein bereiftes Rad, eine Kommunikationsvorrichtung, ein Verfahren und eine Reifenprozessiervorrichtung Bezug genommen wird. Es sollte hervorgehoben werden, dass natürlich jede Kombination von Merkmalen verschiedener Aspekte, Ausführungsformen und Beispiele möglich ist. Insbesondere werden einige Ausführungsformen mit Bezug auf ein Verfahren beschrieben, während andere Ausführungsformen mit Bezug auf eine Vorrichtung (Luftreifen, bereiftes Rad, Kommunikationsvorrichtung, Reifenprozessiervorrichtung) beschrieben werden. Jedoch wird der Fachmann der vorstehenden und der nachfolgenden Beschreibung, den Ansprüche und den Zeichnungen entnehmen, dass, solange es nicht anders angegeben ist, Merkmale verschiedener Aspekte, Ausführungsformen und Beispiele kombinierbar sind und solche Kombinationen von Merkmalen als durch diese Anmeldung offenbart anzusehen sind. Beispielsweise ist selbst ein Merkmal, welches sich auf ein Verfahren bezieht, mit einem Merkmal kombinierbar, welches sich auf eine Vorrichtung bezieht, und umgekehrt.

Weitere Vorteile und Merkmale der vorliegenden Erfindung ergeben sich aus der folgenden beispielhaften Beschreibung derzeit bevorzugter Ausführungsformen, auf welche die Erfindung jedoch nicht beschränkt ist. Die einzelnen Figuren der Zeichnungen dieser Anmeldung sind lediglich als schematisch und als nicht maßstabsgetreu anzusehen.

### KURZE BESCHREIBUNG DER ZEICHNUNGEN

Fig. 1 zeigt einen Luftreifen gemäß Ausführungsformen der hierin offenbarten Gegenstände.
Fig. 2 zeigt in einer Schnittansicht einen Teil einer Seitenwand eines weiteren Luftreifens gemäß Ausführungsformen der hierin offenbarten Gegenstände.
Fig. 3 zeigt einen Teil des Luftreifens aus Fig. 2 in einer Schnittdarstellung gemäß Linie III-III aus Fig. 2.
Fig. 4 zeigt einen Querschnitt durch eine Seitenwand eines weiteren Luftreifens gemäß Ausführungsformen der hierin offenbarten Gegenstände.
Fig. 5 zeigt ein bereiftes Rad gemäß Ausführungsformen der hierin offenbarten Gegenstände.
Fig. 6 zeigt eine Reifenprozessiervorrichtung gemäß Ausführungsformen der hierin offenbarten Gegenstände.

### DETAILLIERTE BESCHREIBUNG

Die Darstellung in den Zeichnungen ist schematisch. Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer unterscheiden. Solche Merkmale bzw. Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei nachfolgendem Auftreten dieser Merkmale und Komponenten (bzw. der entsprechenden Bezugszahlen) nicht wiederholt.

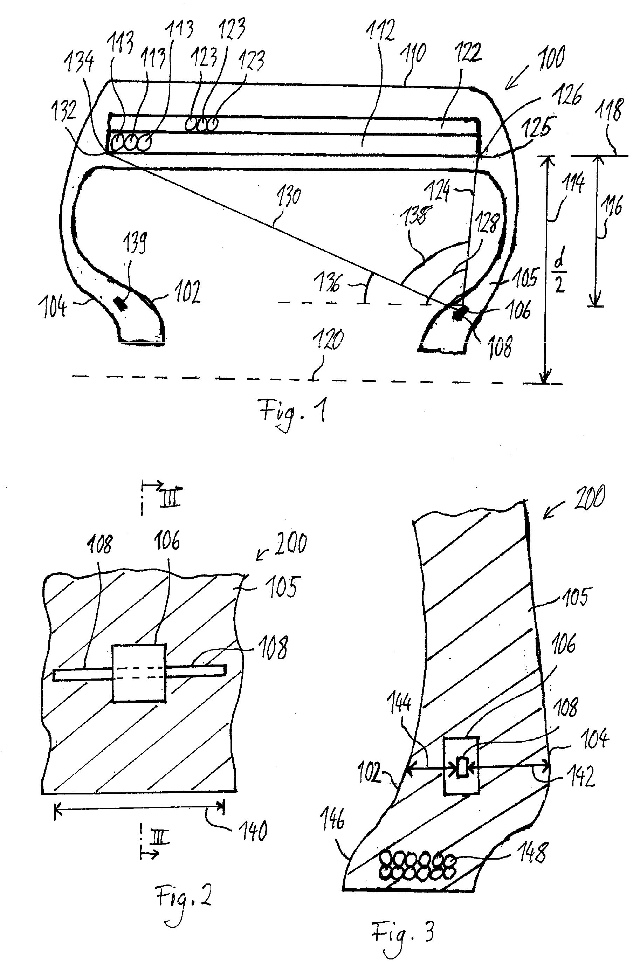

Fig. 1 zeigt einen Luftreifen 100 gemäß Ausführungsformen der hierin offenbarten Gegenstände. Der Luftreifen 100 weist eine Innenoberfläche 102 und eine der inneren Oberfläche 102 abgewandten Außenoberfläche 104 auf. Ferner enthält der Luftreifen in einer Seitenwand 105 einen Funkchip 106 mit einer Antenne 108 zum Senden und/oder empfangen von elektromagnetischen Wellen mit einer Wellenlänge λ.

Der Luftreifen 100 enthält ferner gemäß einer Ausführungsform in einer Lauffläche 110 eine erste Lage an ersten Stahlfäden, die einen ersten Stahlgürtel 112 bilden. Von den ersten Stahlfäden sind in Fig. 1 einige dargestellt und bei 113 markiert Der erste Stahlgürtel 112 weist einen ersten Durchmesser d auf. Gemäß einer Ausführungsform ist der erste Durchmesser d ein erster Innendurchmesser des ersten Stahlgürtels 112. Der halbe erste Durchmesser d (d/2) ist in Fig. 1 bei 114 angegeben. Gemäß einer Ausführungsform ist ein mittlerer Abstand 116 der Antenne 108 zu einer Zylinderfläche 118 um eine Reifendrehachse 120 mit dem ersten Durchmesser kleiner als 1/7 der Wellenlänge λ der elektromagnetischen Wellen (in Fig. 1 nicht dargestellt).

Gemäß einer weiteren Ausführungsform weist der Luftreifen 100 in der Lauffläche 110 eine zweite Lage an zweiten Stahlfäden auf, die gemeinsam einen zweiten Stahlgürtel 122 bilden. Von den zweiten Stahlfäden sind einige in Fig. 1 dargestellt und mit 123 markiert. Gemäß einer Ausführungsform ist der zweite Stahlgürtels 122 radial außerhalb des ersten Stahlgürtels 112 und konzentrisch um den ersten Stahlgürtel 112 angeordnet. Gemäß einer Ausführungsform verlaufen die ersten Stahlfäden 113 und die zweiten Stahlfäden 123 schräg zu einer Umfangsrichtung des Luftreifen (in Fig. 1 nicht dargestellt), wobei die zweiten Stahlfäden einen Winkel zwischen 60 Grad und 120 Grad mit den ersten Stahlfäden bilden.

Obwohl gemäß Ausführungsformen die Gürtel 112, 122 als "Stahlgürtel" bezeichnet sind und als aus "Stahlfäden" gebildet beschrieben sind, können gemäß anderer Ausführungsform selbstverständlich andere Materialien zur Bildung von einem Gürtel oder mehreren Gürteln 112, 122 verwendet werden. Zum Beispiel kann gemäß einer Ausführungsform anstelle von Stahl ein anderes Metall oder eine andere Legierung, insbesondere Metalle/Legierungen mit einer hohen Zugfestigkeit sowie andere geeignete Materialien, wie beispielsweise Kohlefasern verwendet werden.

Gemäß einer Ausführungsform definiert eine kürzeste Verbindungslinie 124 von der Antenne 108 zu einem nächstgelegenen ersten Rand 125 des ersten Stahlgürtels 112 eine erste Position 126 auf dem Stahlgürtels 112 und einen ersten Winkel 128 mit der Reifendrehachse 120. Ferner definiert eine längste Verbindungslinie 130 von der Antenne 108 zu einem zweiten Rand 132 des ersten Stahlgürtels 112 eine zweite Position 134 auf dem zweiten Rand 132 des ersten Stahlgürtels 112 definiert und einen zweiten Winkel 136 mit der Reifendrehachse 120 bildet. gemäß einer Ausführungsform ist hierbei die zweite Position auf dem zweiten Rand des ersten Stahlgürtels 112 durch Spiegelung der ersten Position 126 an einer Ebene senkrecht zu der Reifendrehachse 120 definiert. Gemäß einer Ausführungsform ist eine Differenz 138 zwischen dem ersten Winkel 128 und dem zweiten Winkel 136 kleiner als 45 Grad.

Gemäß einer Ausführungsform weist der Luftreifen 100 ferner einen zweiten Funkchip 139 auf, welcher beispielsweise als Repeater wirken kann.

Fig. 2 zeigt in einer Schnittansicht einen Teil einer Seitenwand 105 eines weiteren Luftreifens 200 gemäß Ausführungsformen der hierin offenbarten Gegenstände.

Gemäß einer Ausführungsform weist die Seitenwand 105 den Funkchip 106 mit der Antenne 108 auf. Gemäß einer Ausführungsform weist die Antenne 108 über ihre gesamte Länge 140 einen Abstand zu der Außenoberfläche (in Fig. 2 nicht dargestellt) auf, der im Mittel kleiner als ein Zehntel der Wellenlänge λ von elektromagnetischen Wellen ist, mit welchen der Funkchip arbeitet.

Fig. 3 zeigt einen Teil des Luftreifens 200 aus Fig. 2 in einer Schnittdarstellung gemäß Linie III-III aus Fig. 2.

Gemäß einer Ausführungsform ist der Abstand 142 der Antenne 108 zu der Außenoberfläche 104 des Luftreifen 200 höchstens doppelt so groß wie ein zweiter Abstand 144 der Antenne 108 zu der Innenoberfläche 102 des Luftreifen 200.

Gemäß einer weiteren Ausführungsform weist der Luftreifen 200 in einem Wulst 146, der auf einer Felge (in Fig. 3 nicht dargestellt) zu liegen kommt, einen Kernreiter 148 auf, der gemäß einer Ausführungsform aus einer Vielzahl von Stahlfäden besteht, die ringförmig geschlossen sind und sich um den gesamten Umfang des Wohls des erstrecken. Gemäß einer Ausführungsform ist die Länge des Kernreiters angepasst, um unerwünschte Resonanzen mit elektromagnetischen Wellen, mit welchen der Funkchip arbeitet, zu vermeiden oder zu reduzieren.

Gemäß einer Ausführungsform ist der Funkchip 106 mit seiner Antenne 108 mit der Vulkanisation des Luftreifens 200 in den Luftreifen 200, beispielsweise in seine Seitenwand 105, einvulkanisiert wie dies aus Fig. 3 ersichtlich ist.

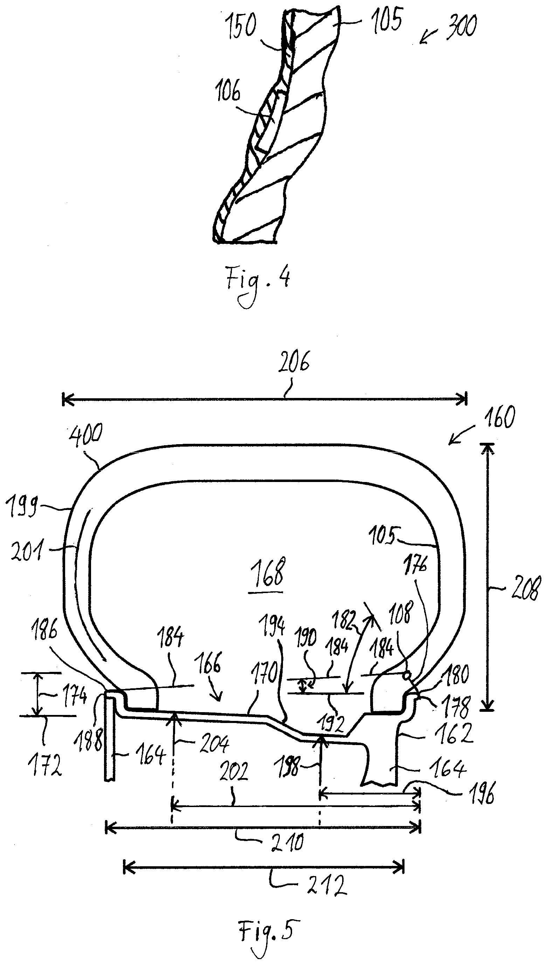

Fig. 4 zeigt einen Querschnitt durch eine Seitenwand 105 eines weiteren Luftreifens 300 gemäß Ausführungsformen der hierin offenbarten Gegenstände. Gemäß einer Ausführungsform wird der Funkchip 106 nach der Vulkanisation des Luftreifens auf diesen aufgebracht und mit einer Abdecklage 150, beispielsweise aus Gummi, abgedeckt.

Fig. 5 zeigt ein bereiftes Rad 160 gemäß Ausführungsformen der hierin offenbarten Gegenstände.

Gemäß einer Ausführungsform weist das bereifte Rad 160 einen Luftreifen 400 und ein Rad 162 auf, auf welchem der Luftreifen 400 montiert ist. Das Rad weist eine Radschüssel 164 und eine Felge 166 auf. Der Luftreifen 400 und die Felge 166 bilden zusammen eine mit Druckgas beaufschlagbare Kavität 168. Gemäß einer Ausführungsform ist die Felge aus einem elektrisch leitfähigen Material wie beispielsweise einer Aluminiumslegierung oder einem Kohlefaserverbundwerkstoff (Carbon).

Gemäß einer Ausführungsform weist ein Felgenbettes 170 der Felge einen mittleren Durchmesser d2 auf, der in Fig. 5 bei 172 angegeben ist. Gemäß einer Ausführungsform ist ein mittlerer Abstand 174 der Antenne 108 zu einer Zylinderfläche um die Reifendrehachse (in Fig. 5 nicht dargestellt) mit dem Durchmesser d2 (angegeben bei 172) kleiner als ein Viertel der Wellenlänge λ.

Gemäß einer Ausführungsform definiert eine kürzeste Verbindungslinie 176 von der Antenne 108 zu einem nächstgelegenen, ersten Felgenrand 178 der Felge 166 eine dritte Position 180 und einen dritten Winkel 182. Ferner definiert eine längste Verbindungslinie 184 von der Antenne 108 zu einer vierten Position 186 auf einem zweiten Felgenrand 188 der Felge 166 einen vierten Winkel 190. Gemäß einer Ausführungsform ist die vierte Position 186 auf dem zweiten Felgenrand 188 durch Spiegelung der dritten Position 180 an einer Ebene senkrecht zu der Reifendrehachse (Ebene und Reifendrehachse in Fig. 5 nicht dargestellt) definiert. Gemäß einer weiteren Ausführungsform ist eine Differenz zwischen dem dritten Winkel 182 und dem vierten Winkel 190 größer als 45 Grad. Bezüglich Fig. 5 wird angemerkt, dass die Linie 192 parallel zur Reifendrehachse angeordnet ist und zur Veranschaulichung des dritten Winkels 182 und des vierten Winkels 190 dient.

Gemäß einer Ausführungsform weisen höchstens 30 % des Felgenbettes 170 eine Neigung gegenüber der Reifendrehachse (zum Beispiel gegenüber der Linie 192) auf, die größer als 7 Grad ist. Beispielsweise ist gemäß einer Ausführungsform die Felge eine Tiefbettfelge, welche einen Abschnitt 194 aufweist, der um mehr als +7 Grad gegenüber der Reifendrehachse geneigt ist. Positive Winkel sind hierbei solche Winkel, unter welchen das Felgenbett zu dem Funkchip hin geneigt ist, wie dies für den Abschnitt 194 in Fig. 5 der Fall ist.

Gemäß einer Ausführungsform weist das Felgenbettes 170 ein Profil auf, welches in einem ersten axialen Abstand f1, welcher in Fig. 5 bei 196 angegeben ist, einen ersten radialen Abstand r1 von der Reifendrehachse aufweist. In Fig. 5 ist der erste radiale Abstand r1 bei 198 angegeben, wobei in Fig. 5 die Reifendrehachse nicht sichtbar und der radiale Abstand r1 nicht vollständig sichtbar ist. Gemäß einer Ausführungsform weist das Profil des Felgenbettes 170 in einem zweiten axialen Abstand f2, angegeben bei 202 einen zweiten radialen Abstand r2 auf, der in Fig. 5 bei 204 angegeben, jedoch wie r1 nicht vollständig sichtbar ist.

Gemäß einer Ausführungsform weist eine erste Seitenwand 105 die Antenne 108 auf und eine zweite Seitenwand 199 des Luftreifens 400, welche der ersten Seitenwand 105 gegenüberliegt, weist ein die Wellenlänge λ reflektierendes Material und/oder ein die Wellenlänge λ absorbierendes Material (wie beispielsweise das Gummimaterial der Seitenwand), beispielsweise ein die Wellenlänge λ reflektierendes Material 201 auf.

Fig. 5 veranschaulicht ferner weitere Abmessungen des bereiften Rades 160, insbesondere eine Reifenbreite 206, eine Reifenhöhe 208, eine Felgenbreite 210 und eine Maulweite 212, die einer Breite des Felgenbettes 170 entspricht.

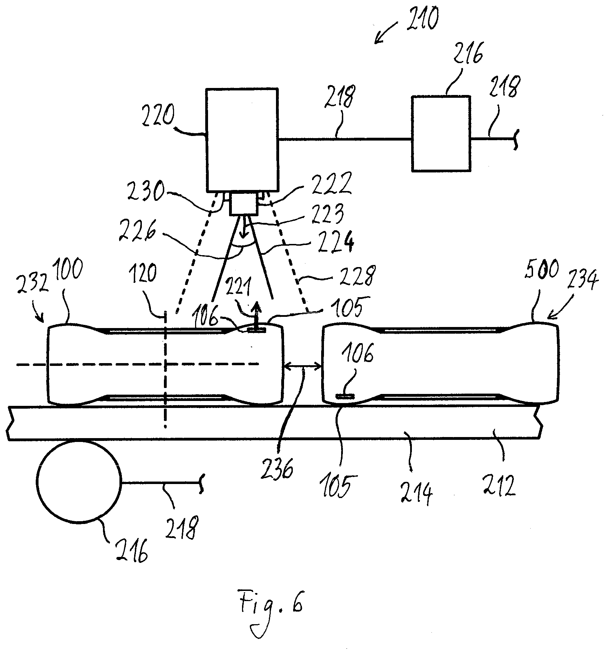

Fig. 6 zeigt eine Reifenprozessiervorrichtung 210 gemäß Ausführungsformen der hierin offenbarten Gegenstände.

Gemäß einer Ausführungsform weist die Reifenprozessiervorrichtung eine Fördereinrichtung 212 auf. Gemäß einer Ausführungsform weist die Fördereinrichtung ein Förderband 214 sowie eine Antriebsvorrichtung 216 zum Antreiben des Förderbandes 214 auf. Die Reifenprozessiervorrichtung 210 weist ferner eine Steuervorrichtung 216 auf, welche mit der Antriebsvorrichtung steuerungsmäßig verbunden ist, angegeben bei 218 in Fig. 6.

Gemäß einer Ausführungsform ist die Fördereinrichtung 212 eingerichtet zum Fördern von einem oder mehreren Luftreifen 100, welche einen Funkchip 106 aufweisen.

Gemäß einer weiteren Ausführungsform weist die Reifenprozessiervorrichtung eine Kommunikationsvorrichtung 220 auf, welche eingerichtet ist zum Auslesen und/oder Beschreiben des Funkchips 106. Gemäß einer Ausführungsform ist der Funkchip 106 ein passiver RFID Chip. In einem solchen Falle ist die Kommunikationsvorrichtung 220 vorzugsweise eingerichtet, um elektromagnetische Strahlung zur Energieversorgung des Funkchips 106 bereitzustellen. Ferner ist gemäß einer Ausführungsform die Kommunikationsvorrichtung 220 eingerichtet, um ein von dem Funkchip 106 abgegebenes Funksignal 221 zu detektieren. Ferner kann gemäß einer Ausführungsform die Kommunikationsvorrichtung 220 eingerichtet sein, um den Funkchip mit einem von der Kommunikationsvorrichtung 220 abgegebenen Funksignal zu beschreiben.

Gemäß einer Ausführungsform weist die Kommunikationsvorrichtung 220 eine Sendevorrichtung 222 auf, welche eingerichtet ist um mindestens 70 % einer Intensität elektromagnetischen Wellen 223, die von der Sendevorrichtung 222 abgegebenen werden, auf einen Kegel 224 mit einem Öffnungswinkel 226 von höchstens 30 Grad zu konzentrieren. Gemäß einer Ausführungsform ist der Funkkegel 224 der Sendevorrichtung 222 parallel zu der Reifendrehachse 120 des Luftreifens ausgerichtet. Die elektromagnetischen Wellen 223 können eine elektromagnetische Strahlung zur Energieversorgung des Funkchips 106 oder eine Funksignal der Kommunikationsvorrichtung 220 an den Funkchip 106 sein.

Gemäß einer Ausführungsform weist die Kommunikationsvorrichtung 220 eine Abschirmvorrichtung 228 auf, welche den Funkchip 106 des Luftreifens 100 während des Auslesens von Störsignalen (z.B. Funksignalen) anderer Funkchips 106 von weiteren Luftreifen 500 abschirmt. Gemäß einer Ausführungsform weist der Luftreifen 100 einen Mindestabstand dx (in Fig. 6 bei 236 angegeben, z.B. dx = 2 λ) zum vorhergehenden oder nachfolgenden Luftreifen.

Es wird angemerkt, dass, obwohl in Fig. 6 lediglich Luftreifen 100, 500 dargestellt sind, gemäß anderer Ausführungsform auch Luftreifen, welche jeweils auf einem Rad montiert sind und mit diesem bereifte Räder bilden, der Kommunikationsvorrichtung 220 zugeführt werden können.

Gemäß einer Ausführungsform weist die Kommunikationsvorrichtung 220 ein Lesegerät 230 zum Auslesen des Funkchips 106 auf. Gemäß einer Ausführungsform ist das Lesegerät 230 eingerichtet, um eine Richtung einer zirkularen Polarisation zu erkennen und/oder eine Intensität des von dem Funkchip über die Antenne 108 abgestrahlten Funksignals 221 zu ermitteln.

Wenn der Funkchip 106 eingerichtet ist zum Abgeben eines zirkular polarisierten Funksignals, kann aus der Richtung der zirkularen Polarisation ermittelt werden, in welcher Orientierung sich der Luftreifen befindet. Beispielsweise kann sich der Luftreifen (wie beispielsweise der Luftreifen 100 in Fig. 6) in einer ersten Orientierung 232 auf der Fördereinrichtung 212 befinden, in welcher eine Seitenwand 105, welche den Funkchip 106 aufweist, dem Lesegerät 230 zugewandt ist. Ferner kann sich der Luftreifen (wie beispielsweise der Luftreifen 500 in Fig. 6) in einer zweiten Orientierung 234 befinden, in welcher eine Seitenwand 105, welche den Funkchip 106 aufweist, dem Lesegerät 230 abgewandt ist. In der zweiten Orientierung ist die Richtung der zirkularen Polarisation des Funksignals des Funkchips 106 entgegengesetzt der Richtung der zirkularen Polarisation, die das Lesegerät detektiert, wenn sich der Luftreifen in der ersten Orientierung befindet.

Alternativ oder zusätzlich kann eine Orientierung des Luftreifens aus der Intensität des von dem Funkchip über die Antenne 108 abgestrahlten Funksignals 221 ermittelt werden.

Gemäß einer Ausführungsform ist die Steuervorrichtung 216 mit der Kommunikationsvorrichtung 220 datenübertragungsmäßig gekoppelt ist, wie bei 218 angegeben. Gemäß einer Ausführungsform ist die Steuervorrichtung 216 eingerichtet, um aus der Richtung der Zirkularpolarisation des von dem Lesegerät 230 empfangenen Funksignals des Funkchips 106 zu bestimmen, ob eine (erste) Seitenwand 105, welche den Funkchip 106 enthält, dem Lesegerät 230 zugewandt oder dem Lesegerät 230 abgewandt ist.

Gemäß einer anderen Ausführungsform ist eine Steuervorrichtung, die welche eingerichtet ist, um die Orientierung des Luftreifens 100 zu ermitteln, ein Teil des Lesegeräts 230 selbst.

Es sollte angemerkt werden, dass ein Funkchip, eine Antenne, ein Luftreifen, ein bereiftes Rad, eine Kommunikationsvorrichtung oder eine Reifenprozessiervorrichtung, wie hierin beschrieben, nicht auf die dezidierten Entitäten beschränkt ist, wie sie in einigen Ausführungsformen beschrieben sind. Vielmehr können die hierin offenbarten Gegenstände auf zahlreiche Weisen in verschiedenen Detailgraden implementiert werden, während sie immer noch die offenbarte spezifische Funktionalität liefern.

Gemäß Ausführungsformen der hierin offenbarten Gegenstände kann jede geeignete Entität (z. B. Funkchip, eine Kommunikationsvorrichtung oder eine

Reifenprozessiervorrichtung) zumindest teilweise in der Form von entsprechenden Computerprogrammen bereitgestellt sein, welche es einer Prozessorvorrichtung ermöglichen, die Funktionalität der entsprechenden Entität zu liefern, wie sie hierin beschrieben ist. Gemäß anderer Ausführungsformen kann jede geeignete Entität, wie sie hierin beschrieben ist, in Hardware bereitgestellt sein. Gemäß anderer, Hybrid-Ausführungsformen können einige Entitäten in Software bereitgestellt sein während andere Entitäten in Hardware bereitgestellt sind.

Es wird darauf hingewiesen, dass jede geeignete hierin offenbarte Entität (z. B. Funkchip, eine Kommunikationsvorrichtung oder eine Reifenprozessiervorrichtung) nicht auf eine dezidierte Entität beschränkt ist, wie sie in einigen Ausführungsformen beschrieben sind. Vielmehr können die hierin beschriebenen Gegenstände auf verschiedene Weisen mit verschiedener Granularität auf Vorrichtungs-Niveau oder auf Softwaremodul-Niveau bereitgestellt sein, während sie immer noch die angegebene Funktionalität liefern. Ferner sollte angemerkt werden, dass gemäß Ausführungsformen eine separate Entität (z. B. ein Softwaremodul, ein Hardwaremodul oder ein Hybridmodul) für jede der hierin offenbarten Funktionen bereitgestellt sein kann. Gemäß anderer Ausführungsformen kann eine Entität konfiguriert sein, um zwei oder mehr Funktionen, wie sie hierin beschrieben sind, zu liefern. Gemäß nochmals anderen Ausführungsformen können zwei oder mehr Entitäten konfiguriert sein, um zusammen eine Funktion, wie sie hierin beschrieben ist, zu liefern.

Gemäß einer Ausführungsform enthält die Steuervorrichtung eine Prozessorvorrichtung, welche mindestens einen Prozessor aufweist zum Ausführen von mindestens einem Computerprogramm bzw. einem Programmelement, welches einem entsprechenden Softwaremodul entspricht. Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offenbart anzusehen sind. Ferner sollte erwähnt werden, dass Begriffe wie "ein" oder "eines" eine Mehrzahl nicht ausschließen. Begriffe wie "enthaltend" oder "aufweisend" schließen weitere Merkmale oder Verfahrensschritte nicht aus.

Zusammenfassend bleibt festzustellen:
Ein Luftreifen, insbesondere ein Luftreifen eines bereiften Rades für ein Kraftfahrzeug, weist eine Innenoberfläche auf, welche eine Kavität definiert; eine Außenoberfläche, welche der Innenoberfläche abgewandt ist; einen Funkchip mit einer Antenne, wobei der Funkchip ausgebildet ist, um mit elektromagnetischen Wellen zu arbeiten und wobei die elektromagnetischen Wellen eine Wellenlänge aufweisen; wobei die Antenne über ihre gesamte Länge einen Abstand zu der Außenoberfläche aufweist, der im Mittel kleiner als 1/10 der Wellenlänge und/oder kleiner als 25 mm ist.

## Patentansprüche

1. Luftreifen (100, 200, 300, 400, 500), insbesondere für ein Kraftfahrzeug, der Luftreifen aufweisend:
eine Innenoberfläche (102), welche eine Kavität (168) definiert;
eine Außenoberfläche (104), welche der Innenoberfläche (102) abgewandt ist;
einen Funkchip (106) mit einer Antenne (108), wobei der Funkchip (106) ausgebildet ist, um mit elektromagnetischen Wellen zu arbeiten und wobei die elektromagnetischen Wellen eine Wellenlänge aufweisen;
wobei die Antenne (108) über ihre gesamte Länge einen Abstand zu der Außenoberfläche (104) aufweist, der im Mittel kleiner als 1/10 der Wellenlänge und/oder kleiner als 25 mm ist;
wobei der Funkchip (106) in oder an einer ersten Seitenwand (105) des Luftreifens angebracht ist;
**dadurch gekennzeichnet, dass**
eine zweite Seitenwand (199) des Luftreifens, welche der ersten Seitenwand (105) gegenüberliegt, ein die Wellenlänge reflektierendes Material und/oder ein die Wellenlänge absorbierendes Material aufweist; und
das absorbierende und/oder reflektierende Material mindestens eine Schicht der zweiten Seitenwand (105) des Luftreifens ist.

2. Luftreifen (100, 200, 300, 400, 500) nach Anspruch 1,
wobei der Abstand der Antenne (108) zu der Außenoberfläche (104) über die gesamte Länge der Antenne (108) stets kleiner als 1/7 der Wellenlänge ist; und/oder
wobei der Abstand der Antenne (108) zu der Außenoberfläche (104) im Mittel höchstens doppelt so groß ist wie ein zweiter Abstand der Antenne (108) zu der Innenoberfläche (102); und/oder
wobei der Luftreifen mindestens eines der folgenden Merkmale aufweist:
der Funkchip (106) wurde vor der Vulkanisation des Luftreifens in den Luftreifen eingebracht, insbesondere in einen seitlichen Teil des Luftreifens, und durch Vulkanisation des Luftreifens in den Luftreifen einvulkanisiert; oder
der Funkchip (106) wurde nach der Vulkanisation des Luftreifens an dem seitlichen Teil angebracht, insbesondere von innen an dem seitlichen Teil angebracht.

3. Luftreifen (100, 200, 300, 400, 500) gemäß irgendeinem der vorhergehenden Ansprüche,
wobei eine Wandstärke einer Seitenwand (105) in einem Gebiet, über das sich der Funkchip (106) erstreckt, größer ist als die Wandstärke an 30% aller anderen Positionen der Seitenwand (105); und/oder
wobei eine mittlere Wandstärke der Seitenwand (105) in einem Gebiet, über das sich der Funkchip (106) erstreckt, zwischen 3 mm und 40 mm beträgt.

4. Luftreifen (100, 200, 300, 400, 500) gemäß irgendeinem der vorhergehenden Ansprüche, wobei
der Luftreifen in einer Lauffläche (110) mindestens eine erste Lage an ersten Stahlfäden (113) aufweist, die gemeinsam einen ersten Stahlgürtel (112) mit einem ersten Durchmesser d bilden, wobei der erste Durchmesser ein maximaler Durchmesser des ersten Stahlgürtels (112) ist; und ein mittlerer Abstand der Antenne (108) zu einer Zylinderfläche um eine Reifendrehachse mit dem ersten Durchmesser d kleiner als 5 cm ist und/oder kleiner als 1/7 der Wellenlänge ist;
insbesondere wobei
der Luftreifen in der Lauffläche (110) eine zweite Lage an zweiten Stahlfäden (123) aufweist, die gemeinsam einen zweiten Stahlgürtel (122) bilden; der zweite Stahlgürtel (122) konzentrisch zum ersten Stahlgürtel (112) angeordnet ist; und die zweiten Stahlfäden (123) einen Winkel zwischen 60° und 120° mit den ersten Stahlfäden (113) bilden;
insbesondere wobei die Antenne (108) bezüglich des ersten Stahlgürtels angeordnet ist, so dass
eine kürzeste Verbindungslinie (124) von der Antenne (108) zu einem nächstgelegenen, ersten Rand des ersten Stahlgürtels eine erste Position auf dem ersten Stahlgürtel definiert und einen ersten Winkel mit einer Reifenachse bildet; und
eine längste Verbindungslinie von der Antenne (108) zu einem zweiten Rand des Stahlgürtels eine zweite Position auf dem ersten Stahlgürtels definiert und einen zweiten Winkel mit der Reifendrehachse bildet, wobei der zweite Rand des ersten Stahlgürtels entgegengesetzt dem ersten Rand des ersten Stahlgürtels ist;
wobei die zweite Position auf dem zweiten Rand des Stahlgürtels durch Spiegelung der ersten Position an einer Ebene senkrecht zur Reifendrehachse definiert ist; und
wobei eine Differenz zwischen dem erstem Winkel und dem zweitem Winkel größer als 45° ist.

5. Luftreifen gemäß irgendeinem der vorhergehenden Ansprüche,
wobei die Wellenlänge in einem Bereich zwischen 10 cm und 40 cm liegt, insbesondere zwischen 25 cm und 35 cm; wobei insbesondere die Wellenlänge eine Sendewellenlänge und/oder eine Empfangswellenlänge ist; und/oder
wobei mindestens 70% der Gesamtintensität der elektromagnetische Wellen einen elektrischen Feld-Vektor aufweisen, der senkrecht steht auf einem Lot auf die Reifendrehachse durch einen Mittelpunktes der Antenne (108); oder mindestens 70% der Gesamtintensität der elektromagnetischen Wellen einen elektrischen Feld-Vektor aufweisen, der parallel angeordnet ist zu einem Lot auf die Reifendrehachse durch einen Mittelpunkt der Antenne (108).

6. Luftreifen (100, 200, 300, 400, 500) gemäß irgendeinem der vorhergehenden Ansprüche, wobei
der Funkchip (106) ein erster Funkchip (106) ist,
der Luftreifen ferner einen zweiten Funkchip (139) enthält, der als Repeater wirkt, insbesondere indem er ein Signal des ersten Funkchips (106) empfängt und weiterleitet oder ein Signal von außerhalb des Luftreifens empfängt und an den ersten Funkchip (106) weiterleitet;
insbesondere wobei der Repeater in oder an der Seitenwand (105) des Luftreifens angebracht ist und der erste Funkchip (106) in der Lauffläche oder an der Innenseite der Lauffläche angebracht ist.

7. Luftreifen (100, 200, 300, 400, 500) gemäß irgendeinem der vorhergehenden Ansprüche,
wobei die Antenne (108) des Funkchips (106) eine Dipolantenne ist und die Polarisation der elektromagnetischen Wellen linear ist; und/oder
wobei die Antenne (108) des Funkchips (106) eine Ringantenne oder eine gekreuzte Dipolantenne ist, insbesondere wobei eine von dem Funkchip (106) über die Antenne (108) abgestrahlte elektromagnetische Welle zirkular polarisiert ist; und/oder
wobei der Funkchip (106) eine vorbestimmte Sendeleistung aufweist oder auf eine vorbestimmte Sendeleistung einstellbar ist; und/oder
wobei der Luftreifen ferner aufweist
einen Kernreiter aus einem leitenden Material, wobei eine Länge des Kernreiters in einem Bereich zwischen (n+0,5 ^{∗} x) ^{∗} λ und (n+0,5 ^{∗} y) ^{∗} λ liegt,
wobei x = 85% und y = 115%; und
n eine natürliche Zahl ist.

8. Bereiftes Rad (160), aufweisend:
einen Luftreifen (100, 200, 300, 400, 500) gemäß irgendeinem der vorhergehenden Ansprüche;
ein Rad, auf welchem der Luftreifen (100, 200, 300, 400, 500) montiert ist, wobei das Rad eine Radschüssel und eine Felge aufweist; und
wobei die Felge aus einem elektrisch leitfähigen Material besteht oder ein elektrisch leitfähiges Material aufweist;
insbesondere wobei die Felge Aluminium aufweist, insbesondere eine Aluminiumlegierung aufweist oder aus einer Aluminiumlegierung besteht; und/oder
wobei ein Felgenbett der Felge einen mittleren Durchmesser d2 aufweist, wobei ein mittlerer Abstand der Antenne (108) zu einer Zylinderfläche um die Reifendrehachse mit dem Durchmesser d2 kleiner als 5 cm ist und/oder kleiner als 1/4 der Wellenlänge ist.

9. Bereiftes Rad (160) gemäß Anspruch 8, wobei die Antenne (108) des Funkchips (106) mit der Felge eine räumliche Anordnung bildet, in welcher,
eine kürzeste Verbindungslinie von der Antenne (108) zu einem nächstgelegenen, ersten Rand der Felge eine dritte Position auf der Felge definiert und einen dritten Winkel mit der Reifendrehachse bildet; und
eine längste Verbindungslinie von der Antenne (108) zu einer vierten Position auf einem zweiten Rand der Felge einen vierten Winkel mit der Reifendrehachse bildet, wobei der zweite Rand der Felge entgegengesetzt dem ersten Rand der Felge ist;
wobei die vierte Position auf dem zweiten Rand der Felge durch Spiegelung der dritten Position an einer Ebene senkrecht zur Reifendrehachse definiert ist; und
wobei die Differenz zwischen dem dritten und dem vierten Winkel größer als 45° ist;
insbesondere wobei der Luftreifen (100, 200, 300, 400, 500) gemäß Anspruch 10 ausgebildet ist, und die Summe der Differenz zwischen dem ersten Winkel und dem zweitem Winkel und der Differenz zwischen dem dritten Winkel und dem vierten Winkel größer als 120° ist.

10. Bereiftes Rad (160) gemäß irgendeinem der Ansprüche 8 bis 9, wobei
der Funkchip (106) von einem ersten Felgenrand einen geringeren Abstand als von einem zweiten Felgenrand aufweist; und
ein Felgenbett der Felge ein Profil aufweist, welches in einem ersten axialen Abstand f1 von dem ersten Felgenrand einen ersten radialen Abstand r1 von der Reifendrehachse aufweist und welches in einem zweiten axialen Abstand f2 von dem ersten Felgenrand einen zweiten radialen Abstand r2 von der Reifendrehachse aufweist, wobei der zweite axiale Abstand f2 größer ist als der erste axiale Abstand f1; und wobei der zweite radiale Abstand r2 größer ist als der erste radiale Abstand r1.

11. Bereiftes Rad (160) gemäß irgendeinem der Ansprüche 8 bis 10, wobei
höchstens 30% eines Felgenbettes der Felge eine Neigung gegenüber der Reifendrehachse von größer als +7° aufweisen, wobei solche Winkel als positiv definiert sind, für welche das Felgenbett zu dem Funkchip (106) hin geneigt ist; und/oder
ein mittlerer Abstand zwischen dem ersten Stahlgürtel und dem Felgenbett kleiner ist als die halbe Wellenlänge; und/oder
mindestens eine Richtungskomponente der Antenne (108) des Funkchips (106) tangential zur Reifenoberfläche verläuft; und/oder
wobei das bereifte Rad an einem Fahrzeug montiert ist und der Luftreifen (100, 200, 300, 400, 500) durch statische oder dynamische Belastung deformiert ist; und/oder
wobei das Verhältnis von einer Felgenbreite der Felge zu einem mittleren Abstand zwischen einem Felgenbett der Felge und dem ersten Stahlgürtel größer ist als 1,5; und/oder
wobei das Verhältnis von der Felgenbreite zu der Wellenlänge größer ist als 0,7.

12. Kommunikationsvorrichtung zum Auslesen und/oder Beschreiben des Funkchips (106) eines Luftreifens gemäß einem der Ansprüche 1 bis 7 oder des Funkchips (106) eines bereiften Rades gemäß einem der Ansprüche 8 bis 11, die Kommunikationsvorrichtung aufweisend
eine Sendevorrichtung (222), welche eingerichtet ist, um mindestens 70% einer Intensität einer von der Sendevorrichtung abgegebenen elektromagnetischen Welle auf einen Kegel mit einem Öffnungswinkel von höchstens 30 Grad zu konzentrieren;
ein Lesegerät zum Auslesen des Funkchips (106),
**dadurch gekennzeichnet, dass**
das Lesegerät (230) eingerichtet ist, um eine Intensität eines Funksignals, welches das Lesegerät von dem Funkchip (106) empfängt, zu ermitteln;
eine Steuervorrichtung (216), welche dem Lesegerät (230) zugeordnet ist, wobei die Steuervorrichtung eingerichtet ist, eine Orientierung des Luftreifens zu bestimmen;
wobei die Steuervorrichtung (216) eingerichtet ist, um aus der Richtung der Polarisation, insbesondere der Drehrichtung der zirkularen Polarisation oder der Intensität eines Funksignals zu bestimmen, ob eine erste Seitenwand (105) des Luftreifens, welche den Funkchip (106) enthält, dem Lesegerät zugewandt ist, oder dem Lesegerät abgewandt ist.

13. Kommunikationsvorrichtung gemäß dem vorhergehenden Anspruch,
wobei der Funkchip (106) ein passiver Chip, insbesondere ein passiver RFID Chip ist, und wobei die Kommunikationsvorrichtung eingerichtet ist, um dem Funkchip (106) eine Energie zum Betrieb des Funkchips (106) bereitzustellen; und/oder
wobei insbesondere der Öffnungswinkel parallel zur Reifendrehachse des Luftreifens oder des bereiften Rades ausgerichtet ist; und/oder
wobei die Kommunikationsvorrichtung eine Abschirmvorrichtung, welche den Funkchip (106) während des Auslesens von Störsignalen anderer Funkchips (106) von weiteren Luftreifen (100, 200, 300, 400, 500) oder bereiften Rädern abschirmt, aufweist.

14. Kommunikationsvorrichtung gemäß irgendeinem der Ansprüche 12 oder 13,
wobei insbesondere das Lesegerät eingerichtet ist, um eine Richtung einer Polarisation, insbesondere eine Drehrichtung einer zirkularen Polarisation zu erkennen.

15. Reifenprozessiervorrichtung enthaltend
eine Kommunikationsvorrichtung (220) gemäß einem der Ansprüche 12 bis 14; und
eine Fördereinrichtung zum Fördern von Luftreifen (100, 200, 300, 400, 500) und/oder bereiften Rädern (160), wobei die Reifenprozessiervorrichtung eingerichtet ist, um einen Luftreifen (100, 200, 300, 400, 500)/ein bereiftes Rad (160) während des Beschreibens und/oder des Auslesens des Funkchips (106) auf einem Mindestabstand zu einem vorhergehenden und/oder nachfolgenden Luftreifen (100, 200, 300, 400, 500)/bereiften Rad (160) zu halten.

## Claims

1. A pneumatic tire (100, 200, 300, 400, 500), in particular for a motor vehicle, comprising pneumatic tires:
an inner surface (102) defining a cavity (168);
an outer surface (104) facing away from the inner surface (102);
a radio chip (106) having an antenna (108), wherein the radio chip (106) is adapted to operate with electromagnetic waves and wherein the electromagnetic waves have a wavelength;
wherein the antenna (108) has a distance to the outer surface (104) over its entire length which is on average less than 1/10 of the wavelength and/or less than 25 mm;
wherein the radio chip (106) is mounted in or on a first sidewall (105) of the pneumatic tire;
**characterized in that**
a second sidewall (199) of the air strip opposite the first sidewall (105) comprises a wavelength reflecting material and/or a wavelength absorbing material; and
the absorbent and/or reflective material is at least one layer of the second sidewall (105) of the pneumatic tire.

2. The pneumatic tire (100, 200, 300, 400, 500) according to claim 1,
wherein the distance of the antenna (108) to the outer surface (104) over the entire length of the antenna (108) is always less than 1/7 of the wavelength; and/or
wherein the distance of the antenna (108) to the outer surface (104) is on average at most twice as large as a second distance of the antenna (108) to the inner surface (102); and/or
wherein the pneumatic tire has at least one of the following features:
the radio chip (106) has been inserted into the pneumatic tire, in particular into a lateral part of the pneumatic tire, prior to vulcanization of the pneumatic tire and has been vulcanized into the pneumatic tire by vulcanization of the pneumatic tire; or
the radio chip (106) was attached to the lateral part after vulcanization of the pneumatic tire, in particular attached to the lateral part from the inside.

3. The pneumatic tire (100, 200, 300, 400, 500) according to any of the preceding claims,
wherein a wall thickness of a side wall (105) in an area over which the radio chip (106) extends is greater than the wall thickness at 30% of all other positions of the side wall (105); and/or
wherein an average wall thickness of the side wall (105) in an area over which the radio chip (106) extends is between 3 mm and 40 mm.

4. The pneumatic tire (100, 200, 300, 400, 500) according to any of the preceding claims, wherein
the pneumatic tire has in a tread (110) at least a first layer of first steel cords (113) collectively forming a first steel belt (112) having a first diameter d, the first diameter being a maximum diameter of the first steel belt (112); and a mean distance of the antenna (108) to a cylinder surface about a tire rotation axis having the first diameter d is less than 5 cm and/or is less than 1/7 of the wavelength;
in particular wherein
the pneumatic tire has in the tread (110) a second layer of second steel cords (123) which together form a second steel belt (122); the second steel belt (122) is concentric with the first steel belt (112); and the second steel cords (123) form an angle between 60° and 120° with the first steel cords (113);
in particular wherein the antenna (108) is arranged with respect to the first steel belt such that a shortest line of connection (124) from the antenna (108) to a nearest first edge of the first steel belt defines a first position on the first steel belt and forms a first angle with a tire axis; and
a longest connecting line from the antenna (108) to a second edge of the steel belt defines a second position on the first steel belt and forms a second angle with the tire rotation axis, the second edge of the first steel belt being opposite to the first edge of the first steel belt;
wherein the second position on the second edge of the steel belt is defined by mirroring the first position on a plane perpendicular to the axis of rotation of the tire; and
wherein a difference between the first angle and the second angle is greater than 45°.

5. The pneumatic tire according to any of the preceding claims,
wherein the wavelength is in a range between 10 cm and 40 cm, in particular between 25 cm and 35 cm; wherein in particular the wavelength is a transmitting wavelength and/or a receiving wavelength; and/or
wherein at least 70% of the total electromagnetic wave intensity comprises an electric field vector perpendicular to a perpendicular to the axis of rotation of the hoop through a center point of the antenna (108); or
at least 70% of the total intensity of the electromagnetic waves have an electric field vector arranged parallel to a perpendicular to the axis of rotation of the tire through a center of the antenna (108).

6. The pneumatic tire (100, 200, 300, 400, 500) according to any one of the preceding claims, wherein
the radio chip (106) is a first radio chip (106),
the pneumatic tire further comprises a second radio chip (139) which acts as a repeater, in particular by receiving and forwarding a signal from the first radio chip (106) or receiving a signal from outside the pneumatic tire and forwarding it to the first radio chip (106);
in particular wherein the repeater is mounted in or on the sidewall (105) of the pneumatic tire and the first radio chip (106) is mounted in the tread or on the inside of the tread.

7. The pneumatic tire (100, 200, 300, 400, 500) according to any of the preceding claims,
wherein the antenna (108) of the radio chip (106) is a dipole antenna and the polarization of the electromagnetic waves is linear; and/or
wherein the antenna (108) of the radio chip (106) is a ring antenna or a crossed dipole antenna, in particular wherein an electromagnetic wave radiated by the radio chip (106) via the antenna (108) is circularly polarized; and/or
wherein the radio chip (106) has a predetermined transmit power or is adjustable to a predetermined transmit power; and/or
wherein the pneumatic tire further comprises a core rider of a conductive material, a length of the core rider being in a range between (n + 0.5 ^{∗} x) ^{∗} λ and (n + 0.5 ^{∗} y) ^{∗} λ,
wherein x = 85% and y = 115%; and
n is a natural number.

8. A tired wheel (160) comprising:
a pneumatic tire (100, 200, 300, 400, 500) according to any of the preceding claims;
a wheel on which the pneumatic tire (100, 200, 300, 400, 500) is mounted,
wherein the wheel comprises a wheel dish and a rim; and
wherein the rim is made of or comprises an electrically conductive material;
in particular wherein the rim comprises aluminium, in particular comprises an aluminium alloy or consists of an aluminium alloy; and/or
wherein a rim of the rim has an average diameter d2, wherein an average distance of the antenna (108) to a cylindrical surface around the tire rotation axis with the diameter d2 is less than 5 cm and/or is less than 1/4 of the wavelength.

9. The tired wheel (160) according to claim 8, wherein the antenna (108) of the radio chip (106) forms with the rim a spatial arrangement in which a shortest line of connection from the antenna (108) to a nearest first edge of the rim defines a third position on the rim and forms a third angle with the tire rotation axis; and
a longest connecting line from the antenna (108) to a fourth position on a second edge of the rim forms a fourth angle with the tire rotation axis, the second edge of the rim being opposite to the first edge of the rim;
wherein the fourth position on the second edge of the rim is defined by mirroring the third position on a plane perpendicular to the axis of rotation of the tire; and
wherein the difference between the third and fourth angles is greater than 45°;
in particular wherein the pneumatic tire (100, 200, 300, 400, 500) is formed according to claim 10, and the sum of the difference between the first angle and the second angle and the difference between the third angle and the fourth angle is greater than 120°.

10. The tired wheel (160) according to any one of claims 8 to 9, wherein
the radio chip (106) is spaced from a first rim edge less than from a second rim edge; and
a rim base of the rim has a profile which, at a first axial distance f1 from the first rim edge, is at a first radial distance r1 from the tire rotation axis and which, at a second axial distance f2 from the first rim edge, is at a second radial distance r2 from the tire rotation axis, wherein the second axial distance f2 is greater than the first axial distance f1; and wherein the second radial distance r2 is greater than the first radial distance r1.

11. The tired wheel (160) according to any one of claims 8 to 10, wherein
at most 30% of a rim bed of the rim has an inclination relative to the tire rotation axis of greater than +7°, such angles being defined as positive for which the rim bed is inclined towards the radio chip (106); and/or
a mean distance between the first steel belt and the rim bed is less than half the wavelength; and/or
at least one directional component of the antenna (108) of the radio chip (106) is tangential to the tire surface; and/or
wherein the tired wheel is mounted on a vehicle and the pneumatic tire (100, 200, 300, 400, 500) is deformed by static or dynamic loading; and/or
wherein the ratio of a rim width of the rim to an average distance between a rim bed of the rim and the first steel belt is greater than 1.5; and/or
wherein the ratio of the rim width to the wavelength is greater than 0.7.

12. A communication device for reading and/or writing the radio chip (106) of a pneumatic tire according to any one of claims 1 to 7 or the radio chip (106) of a tired wheel according to any one of claims 8 to 11, the communication device comprising
a transmitting device (222) arranged to concentrate at least 70% of an intensity of an electromagnetic wave emitted from the transmitting device onto a cone having an aperture angle of at most 30°;
a reader for reading the radio chip (106),
**characterized in that**
the reader (230) is arranged to detect an intensity of a radio signal received by the reader from the radio chip (106);
a control device (216) associated with the reader (230), the control device being arranged to determine an orientation of the air tire;
wherein the control device (216) is arranged to determine from the direction of polarization, in particular the direction of rotation of the circular polarization or the intensity of a radio signal, whether a first side wall (105) of the air strip containing the radio chip (106) is facing the reader or is facing away from the reader.

13. The communication device according to the preceding claim,
wherein the radio chip (106) is a passive chip, in particular a passive RFID chip, and wherein the communication device is arranged to provide power to the radio chip (106) for operating the radio chip (106); and/or
wherein in particular the opening angle is aligned parallel to the tire rotation axis of the pneumatic tire or the tired wheel; and/or
wherein the communication device comprises a shielding device which shields the radio chip (106) from interfering signals from other radio chips (106) of further pneumatic tires (100, 200, 300, 400, 500) or tired wheels during reading.

14. The communication device according to any one of claims 12 or 13,
wherein in particular the reader is arranged to detect a direction of a polarization, in particular a direction of rotation of a circular polarization.

15. A tire processing device comprising
a communication device (220) according to any one of claims 12 to 14; and
a conveying device for conveying pneumatic tires (100, 200, 300, 400, 500) and/or tired wheels (160), wherein the tire processing device is arranged to keep a pneumatic tire (100, 200, 300, 400, 500)/a tired wheel (160) at a minimum distance from a preceding and/or following pneumatic tire (100, 200, 300, 400, 500)/tired wheel (160) during the writing and/or reading of the radio chip (106).

## Revendications

1. Pneumatique (100, 200, 300, 400, 500), en particulier pour un véhicule automobile, comprenant :
une surface intérieure (102), qui définit une cavité (168) ;
une surface extérieure (104), qui est opposée à la surface intérieure (102) ;
une puce RFID (106) pourvue d'une antenne (108), la puce RFID (106) étant conçue pour fonctionner avec des ondes électromagnétiques et les ondes électromagnétiques présentant une longueur d'onde ;
dans lequel l'antenne (108) présente, sur toute sa longueur, une distance par rapport à la surface extérieure (104) qui est en moyenne inférieure à 1/10 de la longueur d'onde et/ou inférieure à 25 mm ;
la puce RFID (106) étant montée dans ou sur une première paroi latérale (105) du pneumatique ;
**caractérisé en ce que**
une seconde paroi latérale (199) du pneumatique, qui fait face à la première paroi latérale (105), présente un matériau réfléchissant la longueur d'onde et/ou un matériau absorbant la longueur d'onde ; et
le matériau absorbant et/ou réfléchissant est au moins une couche de la seconde paroi latérale (105) du pneumatique.

2. Pneumatique (100, 200, 300, 400, 500) selon la revendication 1, dans lequel la distance entre l'antenne (108) et la surface extérieure (104) sur toute la longueur de l'antenne (108) est inférieure à 1/7 de la longueur d'onde ; et/ou
dans lequel la distance entre l'antenne (108) et la surface extérieure (104) est en moyenne au moins deux fois plus grande qu'une seconde distance entre l'antenne (108) et la surface intérieure (102) ; et/ou
dans laquelle le pneumatique présente au moins l'une des caractéristiques suivantes :
la puce RFID (106) a été introduite dans le pneumatique avant la vulcanisation du pneumatique, en particulier dans une partie latérale du pneumatique, et vulcanisée dans le pneumatique par vulcanisation du pneumatique ; ou
la puce RFID (106) a été montée après la vulcanisation du pneumatique au niveau de la partie latérale , en particulier depuis l'intérieur au niveau de la partie latérale.

3. Pneumatique (100, 200, 300, 400, 500) selon l'une quelconque des revendications précédentes,
dans lequel une épaisseur de paroi d'une paroi latérale (105), dans une zone sur laquelle s'étend la puce RFID (106), est supérieure à l'épaisseur de paroi à 30% de toutes les autres positions de la paroi latérale (105) ; et/ou
dans lequel une épaisseur moyenne de la paroi latérale (105) dans une zone sur laquelle s'étend la puce RFID (106) est comprise entre 3 mm et 40 mm.

4. Pneumatique (100, 200, 300, 400, 500) selon l'une quelconque des revendications précédentes, dans lequel
le pneumatique, dans une bande de roulement (110), présente au moins une première couche sur des premiers fils d'acier (113) qui forment ensemble une première ceinture d'acier (112) avec un premier diamètre d, dans lequel le premier diamètre est un diamètre maximal de la première ceinture d'acier (112) ; et une distance moyenne de l'antenne (108) par rapport à une surface cylindrique autour d'un axe de rotation de pneumatique avec le premier diamètre d est inférieure à 5 cm et/ou inférieure à 1/7 de la longueur d'onde ;
en particulier dans lequel :
le pneumatique présente, dans la bande de roulement (110), une seconde couche sur des seconds fils d'acier (123) qui forment ensemble une seconde ceinture d'acier (122) ; la seconde ceinture d'acier (122) est agencée de manière concentrique par rapport à la première ceinture d'acier (112) ; et les seconds fils d'acier (123) forment un angle compris entre 60° et 120° avec les premiers fils d'acier (113) ;
en particulier dans lequel l'antenne (108) est disposée par rapport à la première ceinture d'acier de sorte que
une ligne de connexion la plus courte (124) de l'antenne (108) à un premier bord le plus proche de la première ceinture d'acier définit une première position sur la première ceinture d'acier et forme un premier angle avec un axe de pneumatique ; et
une ligne de connexion la plus longue entre l'antenne (108) et un second bord de la ceinture d'acier définit une deuxième position sur la première ceinture d'acier et forme un deuxième angle avec l'axe de rotation de pneumatique, le second bord de la première ceinture d'acier étant opposé au premier bord de la première ceinture d'acier ;
dans lequel la deuxième position sur le second bord de la ceinture d'acier est définie par le reflet de la première position dans un plan perpendiculaire à l'axe de rotation de pneumatique ; et
dans lequel une différence entre le premier angle et le deuxième angle est supérieure à 45°.

5. Pneumatique selon l'une quelconque des revendications précédentes,
dans lequel la longueur d'onde se trouve dans une plage comprise entre 10 cm et 40 cm, en particulier entre 25 cm et 35 cm ; dans lequel en particulier la longueur d'onde est une longueur d'onde d'émission et/ou une longueur d'onde de réception ; et/ou
dans lequel au moins 70 % de l'intensité totale des ondes électromagnétiques présentent un vecteur de champ électrique qui est perpendiculaire à une soudure sur l'axe de rotation de pneumatique passant par un point central de l'antenne (108) ; ou au moins 70 % de l'intensité totale des ondes électromagnétiques comprennent un vecteur de champ électrique qui est agencé parallèlement par rapport à une soudure sur l'axe de rotation de pneu passant par un point central de l'antenne (108).

6. Pneumatique (100, 200, 300, 400, 500) selon l'une quelconque des revendications précédentes, dans lequel
la puce RFID (106) est une première puce RFID (106),
le pneumatique contient en outre une seconde puce RFID (139) qui agit comme répéteur, notamment en recevant et en transmettant un signal de la première puce RFID (106) ou en recevant un signal depuis l'extérieur du pneumatique et en le transmettant à la première puce RFID (106) ;
en particulier, le répéteur est monté dans ou sur la paroi latérale (105) du pneumatique et la première puce RFID (106) est montée dans la bande de roulement ou sur la face intérieure de la bande de roulement.

7. Pneumatique (100, 200, 300, 400, 500) selon l'une quelconque des revendications précédentes,
dans lequel l'antenne (108) de la puce RFID (106) est une antenne dipôle et la polarisation des ondes électromagnétiques est linéaire ; et/ou
l'antenne (108) de la puce RFID (106) est une antenne annulaire ou une antenne dipôle en croix, en particulier une onde électromagnétique émise par la puce RFID (106) via l'antenne (108) étant polarisée de manière circulaire ; et/ou
dans lequel la puce RFID (106) présente une puissance d'émission prédéterminée ou peut être réglée à une puissance d'émission prédéterminée ; et/ou
dans lequel le pneumatique comprend en outre :
un sommet de talon en un matériau conducteur, une longueur du sommet de talon se situant dans une plage comprise entre (n+0,5 * x) * λ et (n+0,5 * y) * λ,
dans lequel x = 85 % et y = 115 % ; et
n étant un nombre naturel.

8. Roue à pneumatique (160) présentant :
un pneumatique (100, 200, 300, 400, 500) selon l'une quelconque des revendications précédentes ;
une roue sur laquelle le pneumatique (100, 200, 300, 400, 500) est monté, la roue comprenant un disque de roue et une jante ; et
dans laquelle la jante est constituée d'un matériau électriquement conducteur de l'électricité ou présente un matériau électriquement conducteur ;
en particulier, la jante présente de l'aluminium, en particulier un alliage d'aluminium ou est constituée d'un alliage d'aluminium ; et/ou
dans laquelle un lit de jante de la jante présente un diamètre moyen d2, une distance moyenne de l'antenne (108) par rapport à une surface cylindrique autour de l'axe de rotation de pneumatique présentant un diamètre d2 inférieur à 5 cm et/ou inférieur à 1/4 de la longueur d'onde.

9. Roue à pneumatique (160) selon la revendication 8, dans laquelle l'antenne (108) de la puce RFID (106) forme avec la jante un agencement spatial dans laquelle,
une ligne de connexion la plus courte entre l'antenne (108) et un premier bord adjacent de la jante définit une troisième position sur la jante et forme un troisième angle avec l'axe de rotation de pneumatique ; et
une ligne de connexion la plus longue entre l'antenne (108) et une quatrième position sur un second bord de la jante forme un quatrième angle avec l'axe de rotation de pneumatique, le second bord de la jante étant opposé au premier bord de la jante ;
dans laquelle la quatrième position est définie sur le second bord de la jante par le reflet de la troisième position sur un plan perpendiculaire à l'axe de rotation de pneumatique ; et
dans laquelle la différence entre les troisième et quatrième angles est supérieure à 45° ;
en particulier dans laquelle le pneumatique (100, 200, 300, 400, 500) selon la revendication 10 est formé, et la somme de la différence entre le premier angle et le deuxième angle et de la différence entre le troisième angle et le quatrième angle est supérieure à 120°.

10. Roue à pneumatique (160) selon l'une quelconque des revendications 8 à 9, dans laquelle :
la puce RFID (106) présente une distance par rapport à un premier bord de jante inférieure par rapport à un second bord de jante ; et
un lit de jante de la jante présente un profil qui, à une première distance axiale f1 du premier bord de jante, présente une première distance radiale r1 par rapport à l'axe de rotation de pneumatique et qui, à une seconde distance axiale f2 du premier bord de jante, présente une seconde distance radiale r2 par rapport à l'axe de rotation de pneumatique, la seconde distance axiale f2 étant supérieure à la première distance axiale f1 ; et dans laquelle la seconde distance radiale r2 est supérieure à la première distance radiale r1.

11. Roue à pneumatique (160) selon l'une quelconque des revendications 8 à 10, dans laquelle
au plus 30% d'un lit de jante de la jante présentent une inclinaison par rapport à l'axe de rotation de pneumatique supérieure à +7°, dans laquelle de tels angles sont définis comme positifs, pour lesquels le lit de jante est incliné vers la puce RFID(106) ; et/ou
une distance moyenne entre la première ceinture d'acier et le lit de jante est inférieure à la moitié de la longueur d'onde ; et/ou
au moins une composante directionnelle de l'antenne (108) de la puce RFID (106) se déplace tangentiellement par rapport à la surface de pneumatique ; et/ou
dans laquelle la roue à bandage pneumatique est montée sur un véhicule et le pneumatique (100, 200, 300, 400, 500) est déformé par une charge statique ou dynamique ; et/ou
dans laquelle le rapport d'une largeur de jante de la jante à une distance moyenne entre un lit de jante de la jante et la première ceinture d'acier est supérieur à 1,5 ; et/ou
le rapport entre la largeur de jante et la longueur d'onde est supérieur à 0,7.

12. Dispositif de commutation pour la lecture et/ou l'écriture de la puce RFID (106) d'un pneumatique selon l'une quelconque des revendications 1 à 7 ou de la puce RFID (106) d'une roue à bandage pneumatique selon l'une quelconque des revendications 8 à 11, le dispositif de communication présentant
un dispositif émetteur (222), qui est conçu pour concentrer au moins 70 % de l'intensité d'une onde électromagnétique émise par le dispositif émetteur sur un cône présentant un angle d'ouverture d'au plus 30 degrés ;
un lecteur pour la lecture de la puce RFID (106),
**caractérisé en ce que**
le dispositif de lecture (230) est conçu pour déterminer une intensité d'un signal radio que le dispositif de lecture reçoit de la puce RFID (106) ;
un dispositif de commande (216), qui est associé au lecteur (230), le dispositif de commande étant conçu pour déterminer une orientation du pneumatique ;
dans lequel le dispositif de commande (216) est conçu pour déterminer, à partir de la direction de polarisation, en particulier de la direction de de rotation de la polarisation circulaire ou de l'intensité d'un signal radio, si une première paroi latérale (105) du pneumatique contenant la puce RFID (106) est tournée vers le lecteur ou à l'opposé du lecteur.

13. Dispositif de communication selon la revendication précédente, dans lequel la puce RFID (106) est une puce passive, en particulier une puce RFID passive, et dans lequel le dispositif de communication est conçu pour fournir à la puce RFID (106) une énergie pour faire fonctionner la puce RFID (106) ; et/ou
dans lequel en particulier l'angle d'ouverture est parallèle à l'axe de rotation de pneumatique ou de la roue à bandage pneumatique ; et/ou
le dispositif de communication présentant un dispositif de protection qui protège la puce RFID (106), pendant la lecture, de signaux parasites provenant d'autres puces RFID(106) de pneumatiques (100, 200, 300, 400, 500) ou de roues à bandage pneumatique supplémentaires.

14. Dispositif de communication selon l'une quelconque des revendications 12 ou 13,
dans lequel, en particulier, le lecteur est configuré pour reconnaître une direction de polarisation, en particulier une direction de rotation d'une polarisation circulaire.

15. Dispositif de traitement de pneumatiques, comprenant
un dispositif de communication (220) selon l'une quelconque des revendications 12 à 14 ; et
un dispositif de transport pour transporter des pneumatiques (100, 200, 300, 400, 500) et/ou des roues (160) à bandage pneumatique, le dispositif de traitement de pneumatiques étant conçu pour maintenir un pneumatique (100, 200, 300, 400, 500)/une roue à bandage pneumatique(160) à une distance minimum d'un pneumatique (100, 200, 300, 400, 500)/d'une roue à bandage pneumatique (160) précédent(e) et/ou suivant(e) pendant l'écriture et/ou la lecture de la puce RFID (106).
